(19) Europäisches Patentamt
European Patent Office
Office européen des brevets

(11) Veröffentlichungsnummer: **0 502 964 B1**

(12) # EUROPÄISCHE PATENTSCHRIFT

(45) Veröffentlichungstag der Patentschrift: **22.02.95**

(51) Int. Cl.$^{6}$: **C09K 19/52**

(21) Anmeldenummer: **91900771.6**

(22) Anmeldetag: **26.11.90**

(86) Internationale Anmeldenummer:
**PCT/EP90/02018**

(87) Internationale Veröffentlichungsnummer:
**WO 91/08272 (13.06.91 91/13)**

(54) **VERWENDUNG VON KOMPLEXLIGANDEN FÜR IONEN IN FERROELEKTRISCHEN FLÜSSIGKRISTALLMISCHUNGEN.**

(30) Priorität: **01.12.89 DE 3939697**
**12.04.90 DE 4011803**

(43) Veröffentlichungstag der Anmeldung:
**16.09.92 Patentblatt 92/38**

(45) Bekanntmachung des Hinweises auf die Patenterteilung:
**22.02.95 Patentblatt 95/08**

(84) Benannte Vertragsstaaten:
**AT BE CH DE DK ES FR GB GR IT LI LU NL SE**

(56) Entgegenhaltungen:
**EP-A- 0 385 688**
**EP-A- 0 387 561**
**DE-A- 2 637 430**
**DE-C- 2 338 281**

(73) Patentinhaber: **HOECHST AKTIENGESELL-SCHAFT**

**D-65926 Frankfurt (DE)**

(72) Erfinder: **ESCHER, Claus**
**Amselweg 3**
**D-6109 Mühltal (DE)**
Erfinder: **HARADA, Takamasa**
**4-35-15, Kikari**
**Inzai-machi**
**Inbagun**
**Chiba 270-13 (JP)**
Erfinder: **ILLIAN, Gerhard**
**Rauenthalerweg 32**
**D-6000 Frankfurt am Main (DE)**
Erfinder: **RÖSCH, Norbert**
**Geisenheimer Strasse 95**
**D-6000 Frankfurt am Main (DE)**
Erfinder: **WINGEN, Rainer**
**Brunnenstrasse 1**
**D-6234 Hattersheim am Main (DE)**

**EP 0 502 964 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Schalt- und Anzeigeelemente mit einem Gehalt an ferroelektrischen Flüssigkristallmischungen ("FLC-Lichtventile") sind beispielsweise aus der EP-B 0 032 362 bekannt. Flüssigkristallichtventile sind Vorrichtungen, die z. B. aufgrund elektrischer Beschaltung ihre optischen Transmissionseigenschaften derart ändern, daß durchfallendes und gegebenenfalls wieder reflektiertes Licht intensitätsmoduliert wird. Beispiele sind die bekannten Uhren- und Taschenrechneranzeigen oder Flüssigkristalldisplays im OA- (office automation) oder TV- (television) Bereich. Dazu zählen aber auch optische Verschlüsse, sogenannte "Light shutter", wie sie in Kopiermaschinen, Druckern, Schweißbrillen, Polbrillen zur dreidimensionalen Betrachtung etc. eingesetzt werden. Auch sogenannte "spatial light modulators" zählen zum Anwendungsbereich flüssigkristalliner Lichtventile (siehe Liquid Crystal Device Handbook, Nikkan Kogyo Shimbun, Tokyo, 1989; ISBN 4-526-02590-9G 3054 und darin zitierte Arbeiten).

Die elektrooptischen Schalt- und Anzeigeelemente enthalten im allgemeinen mindestens eine Orientierungsschicht, Elektroden, Begrenzungsscheiben (z. B. aus Glas), einen Polarisator, sofern sie im "guest-host"- oder reflexiven Modus betrieben werden, oder zwei Polarisatoren, wenn als Modus die transmissive Doppelbrechung ("birefringence mode") genutzt wird. Die Schalt- und Anzeigeelemente können gegebenenfalls weitere Hilfsschichten, wie z. B. Diffusionssperr- oder Isolationsschichten enthalten.

Die Orientierungsschichten, die aus einem organischen (z. B. Polyimid, Polyamid, Polyvinylalkohol) oder anorganischen (z. B. SiO) Material bestehen, bringen gemeinsam mit einem hinreichend klein gewählten Abstand der Begrenzungsscheiben, die FLC-Moleküle in eine Konfiguration, bei der die Moleküle mit ihren Längsachsen parallel zueinander liegen und die smektischen Ebenen senkrecht oder schräg zur Orientierungsschicht angeordnet sind. In dieser Anordnung haben die Moleküle bekanntlich zwei gleichwertige Orientierungen, zwischen denen sie durch pulsartiges Anlegen eines elektrischen Feldes geschaltet werden können, d. h. FLC-Displays sind bistabil schaltbar. Die Schaltzeiten sind umgekehrt proportional zur spontanen Polarisation der FLC-Mischung und liegen im Bereich von µs.

Als Hauptvorteil solcher FLC-Displays gegenüber den in der industriellen Praxis bisher im wesentlichen noch anzutreffenden LC-Displays wird das erreichbare Multiplex-Verhältnis angesehen, d.h. die maximale Zahl der im zeitlichsequentiellen Verfahren ("Multiplex-Verfahren") ansteuerbaren Zeilen, das bei FLC-Displays im Gegensatz zu LC-Displays praktisch unbegrenzt ist. Diese elektrische Ansteuerung basiert im wesentlichen auf der vorstehend genannten und in SID 85 DIGEST p. 131 (1985) beispielhaft beschriebenen Pulsadressierung.

Bei der Weiterentwicklung der FLC-Displays in den letzten Jahren hat sich jedoch ein Nachteil herausgestellt, der darin liegt, daß die genannte Pulsadressierung häufig nur im Falle hinreichend kleiner Werte für die spontane Polarisation zu einem reproduzierbaren Schalten zwischen den beiden stabilen Zuständen führt. Beispielsweise kann man beobachten, daß ein FLC-Display, das sich längere Zeit in einem der beiden stabilen Zustände befunden hat ("stehendes Bild"), sich nur sehr schwer, d. h. nur mit hoher Amplitude, sehr langer Pulsdauer der angelegten Spannung oder nach wiederholt applizierten Pulsen in den jeweils anderen Zustand umschalten läßt. Dieses Verhalten einer optischen Hysterese führt bei bildhaften Anzeigen dazu, daß ein über einen längeren Zeitraum eingeschriebenes Bild im Nachfolgebild schemenhaft als "Geisterbild" zu erkennen ist. Diese Beobachtung einer optischen Hysterese ist um so ausgeprägter, je höher die spontane Polarisation der FLC-Mischung ist und hängt zusätzlich von der Art und Dicke der Orientierungsschicht ab.

Auch bei geringer spontaner Polarisation macht sich dieser Effekt schon störend bemerkbar. Bei besonders hohen Werten ($P_s > 35\ nC \cdot cm^{-2}$) läßt sich über eine Pulsadressierung in der Regel überhaupt kein Schalten mehr erzielen. Da sich sehr geringe Schaltzeiten bekanntermaßen nur durch hohe Polarisation erreichen lassen, verhindert dies gerade den Einsatz sehr schneller FLC-Mischungen. Eine der Vorstellungen über die Ursache des Phänomens einer optischen Hysterese geht dahin, daß ionische Verunreinigungen in der FLC-Mischung dafür verantwortlich sind (vgl. z. B. J. Dijon et. al., SID conference, San Diego 1988, Seiten 2 - 249). Die bisher bekannten Lösungsansätze a) unmittelbarer Kontakt zwischen FLC-Mischung und Elektroden und b) aufwendige Reinigung haben noch nicht zu durchgreifenden Erfolgen geführt; die erste Methode ist aufgrund der Notwendigkeit besonderer Maßnahmen zur Vermeidung von elektrischen Kurtschlüssen sehr aufwendig, die zweite erfordert für jede Komponente einer Mischung eine spezielle Reinigungsart und eine aufwendige und teuere Handhabung der FLC-Mischung. Ein weiterer Lösungsansatz wird von M. Nitta et. al. (Japanese Journal of Applied Physics 27 (1988) 1447) vorgeschlagen. Hierbei werden "Charge-Transfer"-Komplexe (CTC) zur Verbesserung des optischen Schaltverhaltens eingesetzt.

Ein weiterer gravierender Nachteil von FLC-Displays ist außerdem, daß sie im nichtangesteuerten Zustand (meistens) eine unerwünschte Nichtuniformität des Direktors (d. h. der Molekül-Vorzugsrichtung),

einen oder mehrere sogenannte Twist-Zustände, aufweisen (s. M.A. Handschy, N.A. Clark, S.T. Lagerwall; Phys. Rev. Lett. Bd. 51, 471 (1983): M. Glogarova, J. Pavel; J.Phys. (France) Bd. 45, 143 (1984): N. Higi, T. Ouchi, H. Takezoe, A. Fukuda; Jap. J. Appl. Phys. Bd. 27, 8 (1988)). Diese Nichtuniformität führt im Memory-Zustand und im Multiplexbetrieb zu einer starken Kontrastverminderung im Display, insbesondere dadurch, daß der lichtsperrende Zustand eine beträchtliche Aufhellung erfährt (grauer Dunkelzustand). Der Kontrast ist das Verhältnis der Transmissionen im hellen und dunklen Schaltzustand. Das Auftreten von Twist-Zuständen ist außerdem häufig mit einer Wellenlängendispersion verknüpft, die zu verfälschten Farben im Display führen kann. Derzeit werden für FLC-Displays maximale Kontrastwerte von 5 bis 10 angegeben. Eine Ausnahme bilden Displays, die als Orientierungsschicht schräg aufgedampftes SiO verwenden und die höhere Werte für den Kontrast aufweisen, aber wegen der erheblichen Kosten für die Aufbringung des SiO-Schicht selten anzutreffen sind.

Es wurde bereits versucht, durch geeignete Wahl von Orientierungsschichten das Auftreten der störenden Twist-Zustände zu unterdrücken, wobei aber bislang nur unbefriedigende Ergebnisse erzielt wurden. Sehr oft erwiesen sich die manchmal auftretenden nahezu uniformen Zustände (z. B. bei Verwendung von schrägbedampften SiO) als instabil und zerfielen wieder in Twist-Zustände. Das Auftreten von Twist-Zuständen scheint insbesondere bei der Verwendung von ferroelektrischen Flüssigkristallmischungen mit hoher spontaner Polarisation begünstigt zu sein (vgl. dazu M.A. Handschy and N.A. Clark; Ferroelectrics 59, 69 (1984)). Solche Mischungen sind jedoch besonders geeignet, weil sie zu kurzen Schaltzeiten führen.

Aufgabe der vorliegenden Erfindung ist es, FLC-Mischungen bestehend aus mindestens zwei Komponenten bereitzustellen, die keine bzw. nur eine vernachlässigbar kleine optische Hysterese und die damit verbundenen "Geisterbilder" zeigen und die keine Twist-Zustände sondern uniforme Zustände ausbilden und somit zu einem hohen optischen Kontrast führen.

Überraschend wurde gefunden, daß durch Zugabe von Komplexliganden für Ionen zu FLC-Mischungen die oben beschriebenen "Geisterbilder" und die Twist-Zustände unterdrückt werden können. FLC-Mischungen, die ein organisches Material enthalten, das Ionen fängt, sind auch in der prioritätsälteren` nicht vorveröffentlichten EP-A 0 385 688 (benannte Vertragsstaaten CH, DE, FR, GB, LI, NL) beschrieben.

Durch die erfindungsgemäße Zugabe von Komplexliganden können sogar ansonsten im Multiplexverfahren nichtschaltbare FLC-Mischungen mit besonders hohen Werten der spontanen Polarisation ($P_s > 35$, insbesondere $> 50$ $nCcm^{-2}$) zum Schalten gebracht werden. Ein weiterer Vorteil der Erfindung liegt in der Sprunghaften Verbesserung des Kontrastes.

Ein wesentlicher Vorteil besteht auch darin, daß FLC-Displays, die nach längerer Lagerung oft nicht mehr funktionsfähig sind, mit den erfindungsgemäß eingesetzten FLC-Mischungen auch nach längerer Zeit schaltbar bleiben. Da für die Entstehung der "Geisterbilder" ionische Verunreinigungen verantwortlich sind und diese durch einen überschüssigen Zusatz an Komplexliganden beseitigt werden können, haben auch nachträglich eingebrachte und z. B. durch Diffusion aus der Orientierungsschicht entstehende Verunreinigungen ionischer Art keine nachteiligen Folgen.

Die erfindungsgemäßen FLC-Lichtventile enthalten eine ferroelektrische flüssigkristalline Mischung (FLC-Mischung), die mindestens eine Verbindung enthält, die einen Komplexliganden für Ionen darstellt.

Die Schalt- und Anzeigevorrichtungen weisen folgende Bestandteile auf: eine erfindungsgemäße flüssigkristalline Mischung, Trägerplatten (z. B. aus Glas oder Kunststoff), beschichtet mit transparenten Elektroden (zwei Elektroden), mindestens eine Orientierungsschicht, Abstandshalter, Kleberahmen, Polarisatoren sowie für Farbdisplays dünne Farbfilterscheiben. Weitere mögliche Komponenten sind Antireflex-, Passivierungs-, Ausgleichs- und Sperrschichten sowie elektrisch nichtlineare Elemente, wie z. B. Dünnschichttransistoren (TFT) und Metall-Isolator-Metall (MIM)-Elemente. Im Detail ist der allgemeine Aufbau von Flüssigkristall-Displays bereits in einschlägigen Monographien beschrieben (z. B. E. Kaneko, "Liquid Crystal TV Displays: Principles and Applications of Liquid Crystal Diplays", KTK Scientific Publishers, 1987, Seiten 12 bis 30 und 163 bis 172).

Unter den FLC-Lichtventilen werden Schaltvorrichtungen, die im Multiplexverfahren angesteuert werden, bevorzugt. Besonders bevorzugt werden Flüssigkristallzellen, die in SSFLC-Technik ("surface stabilized ferroelectric liquid crystal") arbeiten und bei denen die Schichtdicke (d. h. Abstand der Begrenzungsscheiben) 1 bis 20 µm beträgt. Besonders bevorzugt ist eine Schichtdicke von 1 bis 10 µm, im Doppelbrechungsmodus insbesondere von 1,2 bis 3 µm.

Des weiteren lassen sich die erfindungsgemäßen Verbindungen vorteilhaft beim Betrieb eines SSFLC-Displays im sog. "guest-host mode" einsetzen, bei dem der optische Effekt nicht auf Doppelbrechungsphänomene zurückgeht, sondern auf die anisotrope Absorption dichroitischer Farbstoffe, die in einer FLC-Matrix gelöst sind.

Die erfindungsgemäßen Verbindungen unterdrücken das Auftreten der optischen Hysterese und/oder von Twist-Zuständen für verschiedene Geometrien der smektischen Lagen in der SSFLC-Zelle (siehe z. B. H.R. Dübal et al., Proc. 6th Intl. Symp. on Electrets, Oxford, England 1988). Insbesondere gilt dies für die sog. "jungfräuliche (virgin) Flüssigkristall-Textur", bei der die smektischen Lagen gewinkelt verlaufen ("Chevron"-Geometrie) und für die "bookshelf"- oder "quasibookshelf"-Geometrie, bei denen die smektischen Lagen senkrecht oder nahezu senkrecht zu den Glasplatten verlaufen (siehe Y. Sato et. al., Jap. J. Appl. Phys. Bd. 28, 483 (1989)). Die Verwendung der erfindungsgemäßen FLC-Mischungen in dieser "bookshelf"-Geometrie ist besonders vorteilhaft, da dies nicht nur zu guten Dunkelzuständen, sondern wegen des großen effektiven Schaltwinkels auch zu einer hohen Transmission des Hellzustandes führt.

Außerdem hat sich gezeigt, daß die erfindungsgemäßen Komplexliganden in den FLC-Mischungen die feldinduzierte Herstellung einer homogenen "quasibookshelf"-Geometrie (Y. Sato et. al., Jap. J. Appl. Phys. Bd. 28, 483 (1989)) erleichtern.

Die Flüssigkristallmischungen bestehen in der Regel aus 2 bis 20, vorzugsweise 2 bis 15 Komponenten, darunter mindestens ein Komplexligand für Ionen. Die anderen Bestandteile werden vorzugsweise ausgewählt aus den bekannten Verbindungen mit nematischen und/oder cholesterischen und/oder geneigtsmektischen Phasen. Dazu gehören beispielsweise Schiffsche Basen, Biphenyle, Terphenyle, Phenylcyclohexane, Cyclohexylbiphenyle, Pyrimidine, Difluorphenyle und Ester von p-Alkylbenzoesäuren. Besonders bevorzugt sind dabei Mischungen, die Phenylpyrimidin-, Phenylpyridin- oder Phenylthiadiazol-Derivate enthalten. Im allgemeinen liegen die im Handel erhältlichen Flüssigkristall-Mischungen bereits vor der Zugabe der erfindungsgemäßen Verbindung(en) als Gemische verschiedener Komponenten vor, von denen mindestens eine mesogen ist, d. h. als Verbindung, in derivatisierter Form oder im Gemisch mit bestimmten Komponenten eine Flüssigkristall-Phase zeigt.

Die FLC-Mischung weist bevorzugterweise im Arbeitstemperaturbereich eine $S_c^*$-Phase auf und die Phasenfolge der Mischung beim Abkühlen lautet:

$I \rightarrow N^* \rightarrow S_A^* \rightarrow S_C^*$ oder $I \rightarrow N^* \rightarrow S_C^*$.

Als Komplexliganden werden zur Verminderung der optischen Hysterese und zur Beseitigung von Twist-Zuständen bevorzugt elektrisch neutrale Verbindungen eingesetzt.

Vorzugsweise enthalten diese Verbindungen mindestens zwei Stickstoff- und/oder Sauerstoff- und/oder Schwefel- und oder Phosphor-Donorzentren und sind Komplexliganden für Kationen.

Besonders bevorzugt stellen diese Verbindungen Medio- oder Makrocyclen dar (8 bis 12 Ringglieder = Mediocyclen, ≧13 = Makrocyclen nach Römpps Chemie Lexikon, 8. Aufl., Franksche Verlagsbuchhandlung Stuttgart 1989).

Verwendung für die erfindungsgemäßen FLC-Mischungen finden insbesondere Kryptanden, Coronanden und Podanden, vorzugsweise in Konzentrationen von 0,01 bis 10 Mol-% bezüglich der Gesamtmischung. Ganz besonders bevorzugt werden cyclische Verbindungen mit 16 oder mehr Ringgliedern eingesetzt. Dabei werden bicyclische Liganden vom Typ Kryptand bevorzugt.

Zur Klassifizierung der genannten Komplexliganden sei auf E. Weber und F. Vögtle, Inorganica Chimica Acta, Bd. 45, (1989) L65-L67 verwiesen. Die dort aufgeführten Ligandtopologien sind im folgenden wiedergegeben:

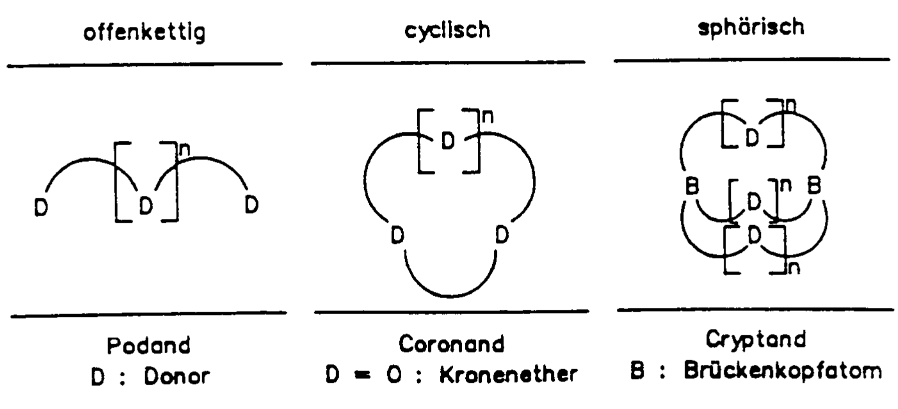

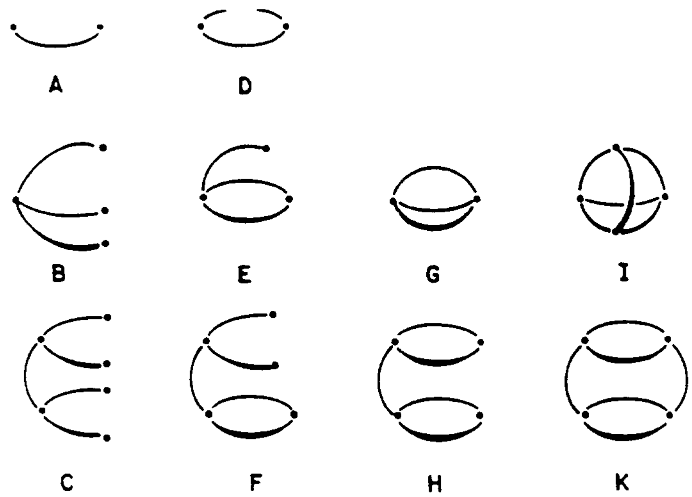


A–C: acyclic (podands); D–F: monocyclic (coronands); G–H: bicyclic (coronands, cryptands); I–K: tricyclic (cryptands).

Typische Beispiele für Coronanden sind:

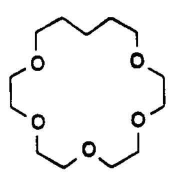
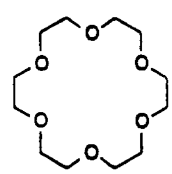
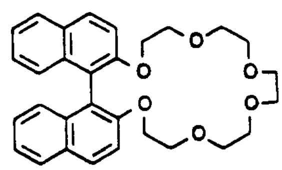

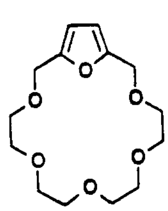
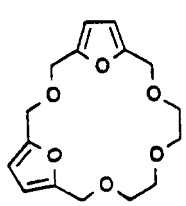
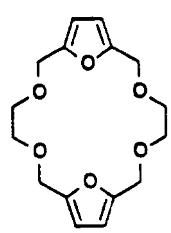
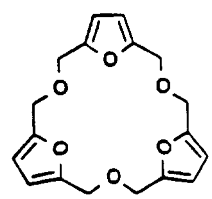

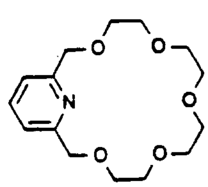
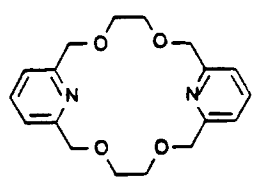
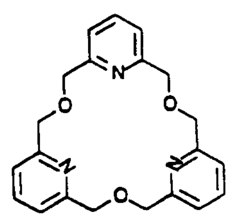

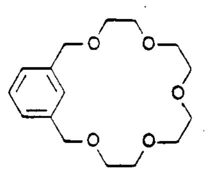
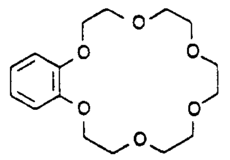
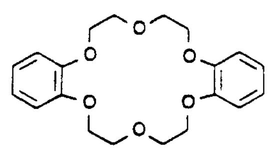

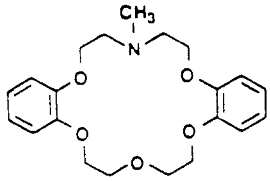
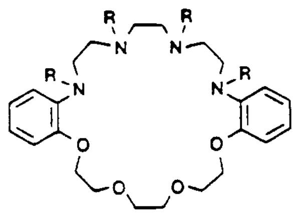
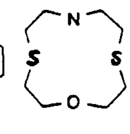
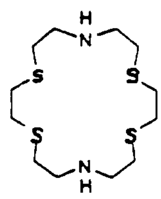

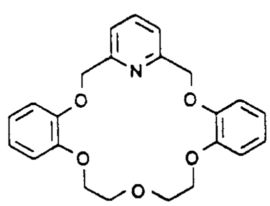
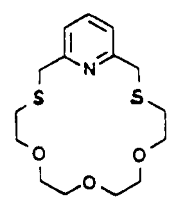
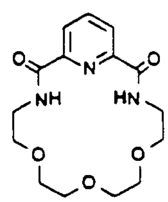

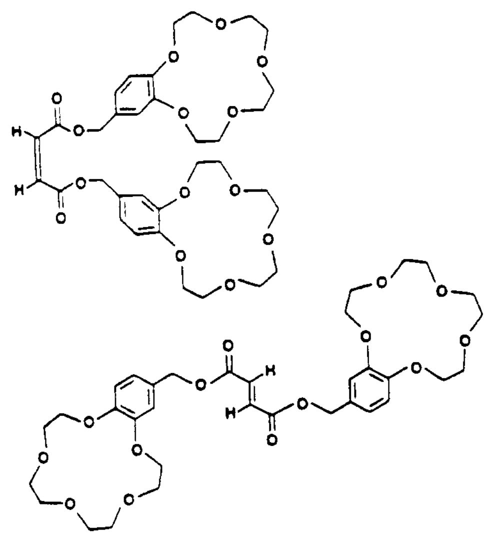
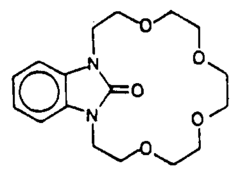
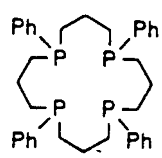
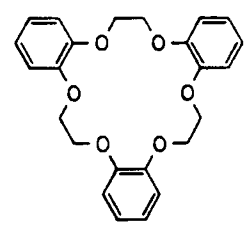

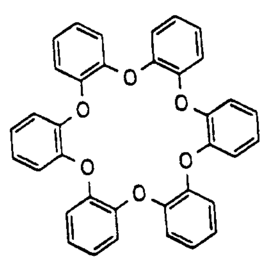
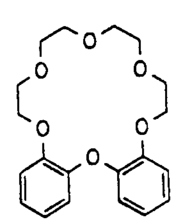

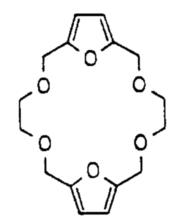

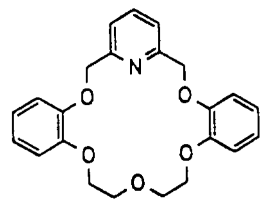

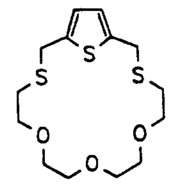

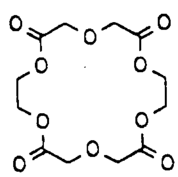

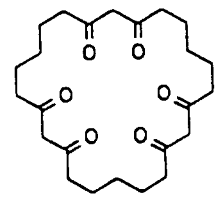

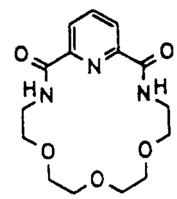

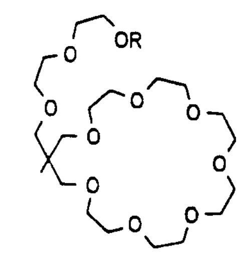

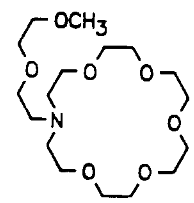

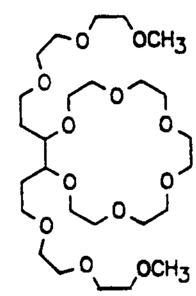

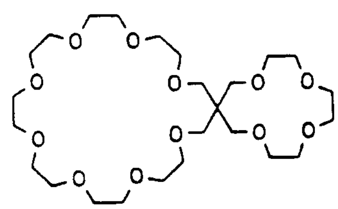

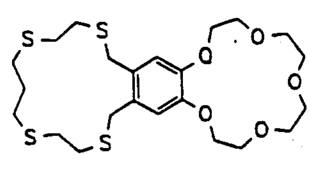

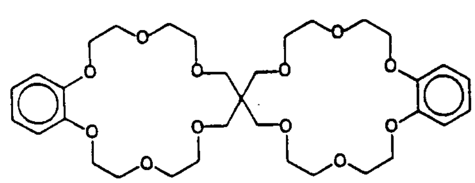

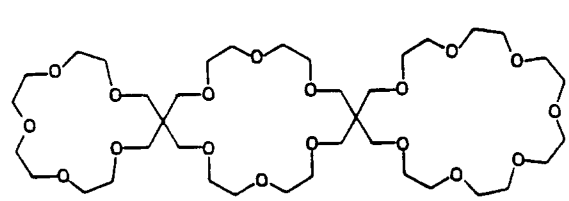

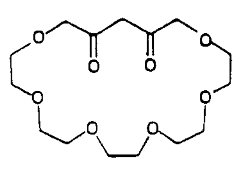

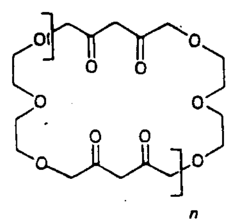

n = 1
n = 2

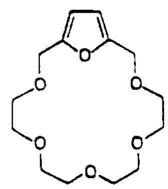

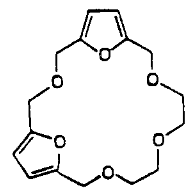

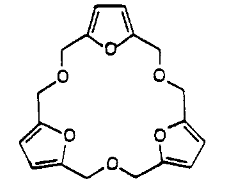

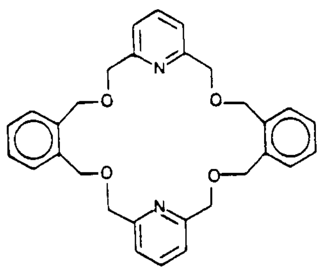

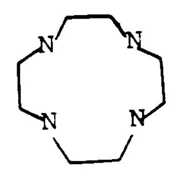

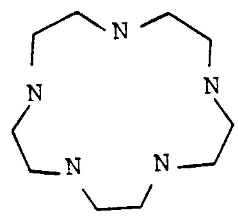

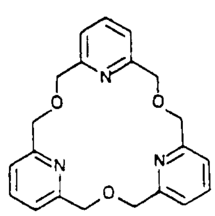

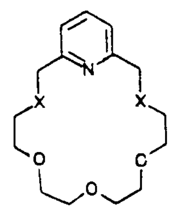

X = O

X = S

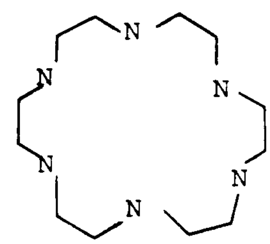

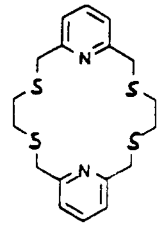

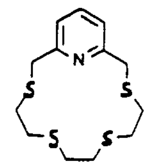

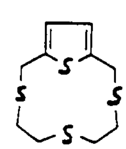

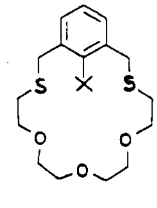

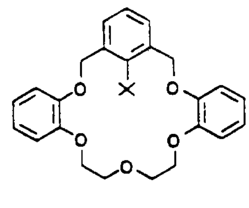

X = H, $OCH_3$, $SCH_3$, $NO_2$, CN, $C_6H_5$, $COOCH_3$, F, Cl

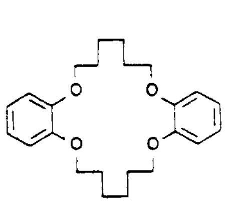

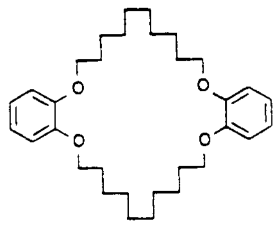

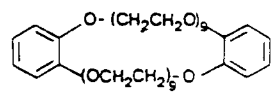

30

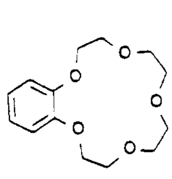

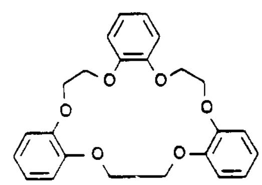

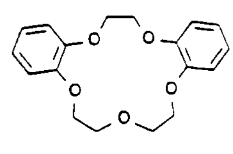

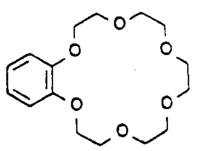

22

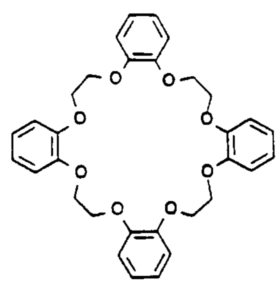

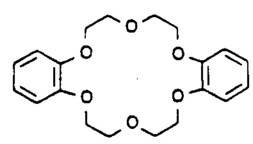

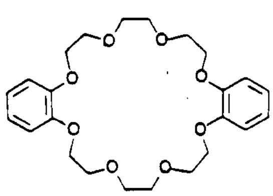

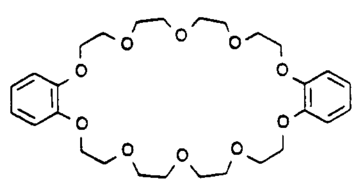

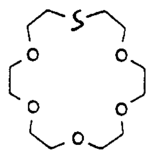

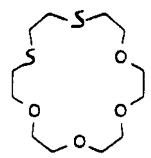

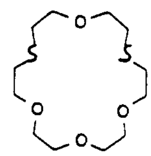

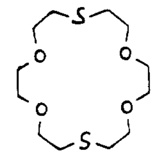

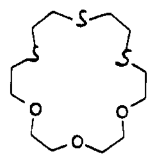

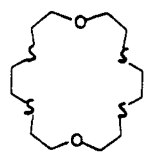

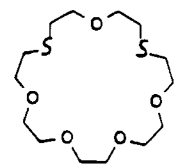

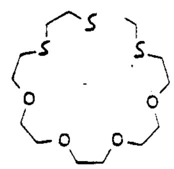

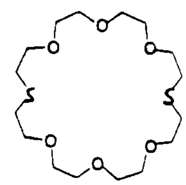

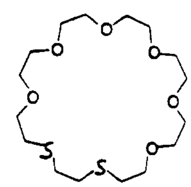

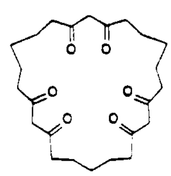

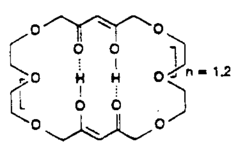

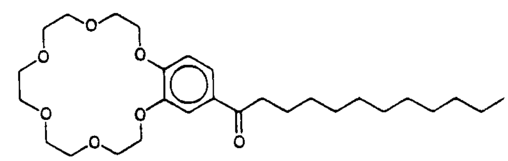

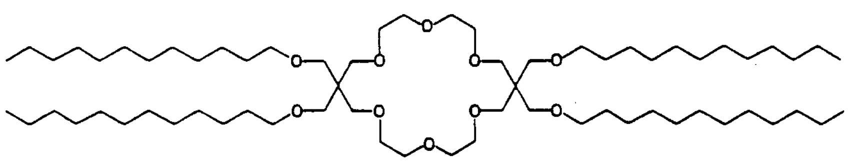

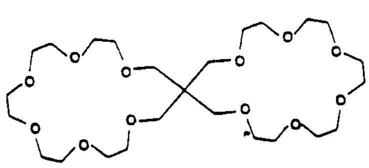

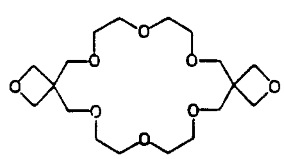

Typische Beispiele für Kryptanden sind:

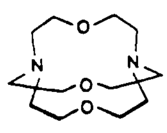
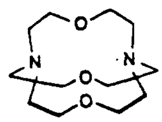
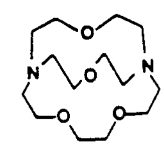
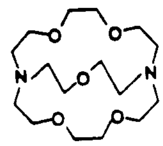

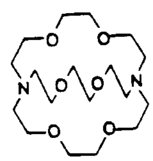
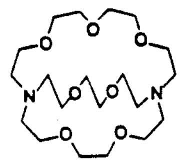
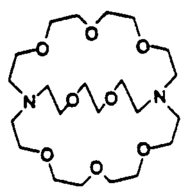
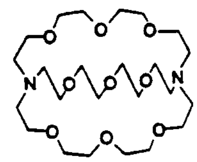

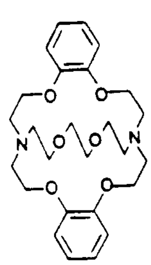

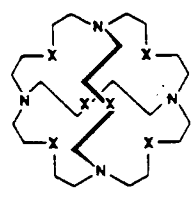

$X = O$

$X = (CH_2)_2$

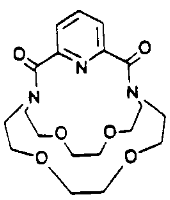

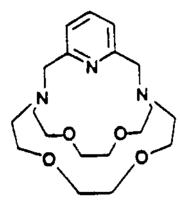

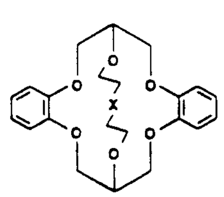

$X = OCH_2CH_2O$

$X = (OCH_2CH_2)_2O$

X = 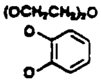

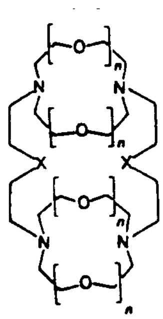

$X = O; n = 1$

$X = O; n = 2$

$X = NH; n = 2$

$X = CH_2; n = 2$

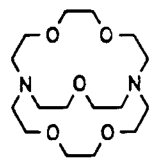

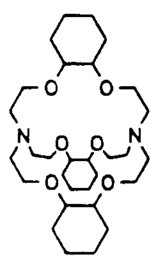

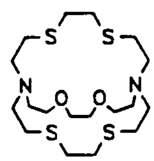

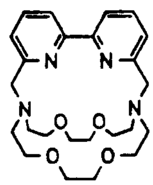

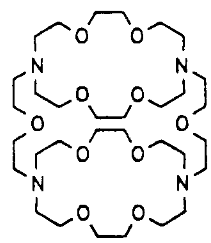

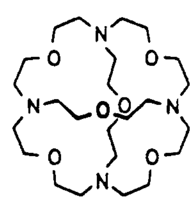

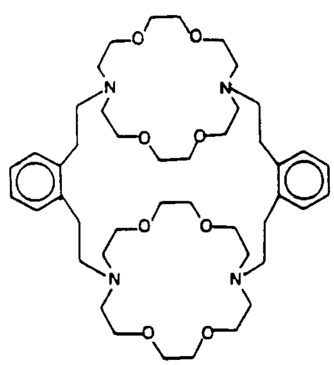

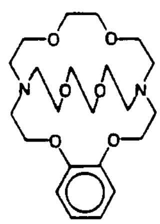

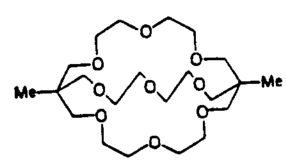

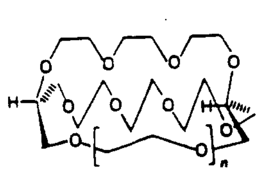

$n = 2$
$n = 3$

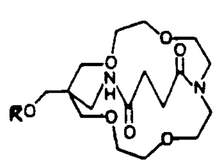

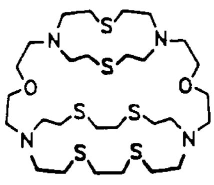

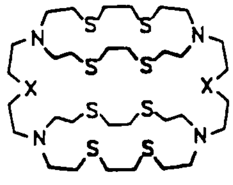

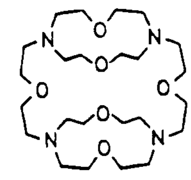

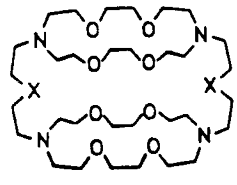

X=O

X=$CH_2$

X=o-Phenylen

X=NH

Charakteristische Vertreter von Podanden sind:

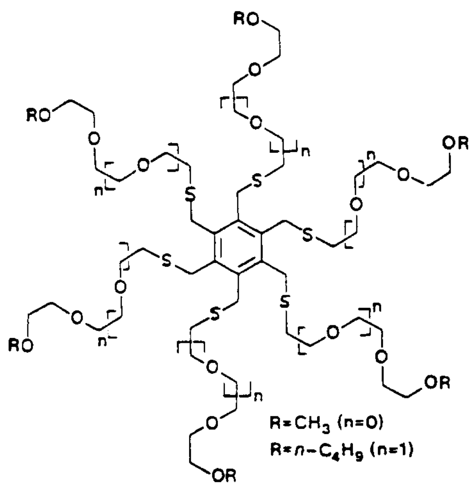

R=$CH_3$ (n=0)

R=$n$-$C_4H_9$ (n=1)

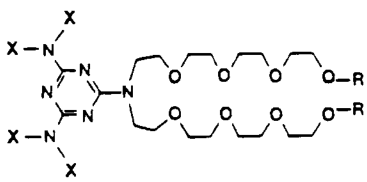

R = n-$C_4H_9$

R = n-$C_8H_{17}$

X: 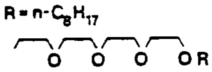

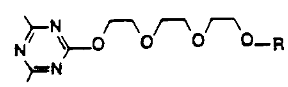

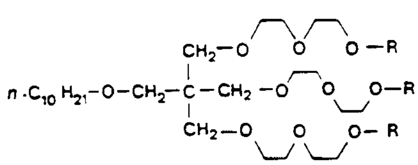

R = H

R = $CH_2CH_2OH$

R = $n$-$C_8H_{17}$

R = $CH_2CH_2O$-$n$-$C_8H_{17}$

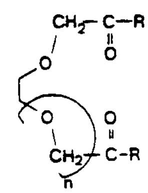

R = $N(C_6H_5)_2$,

$NH(CH_2)_{10}COOC_2H_5$

u.a.

(n = 1,2)

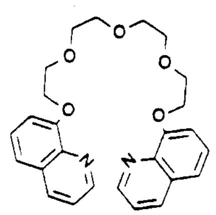
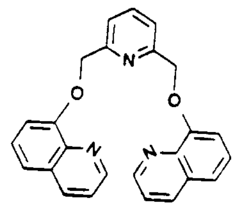
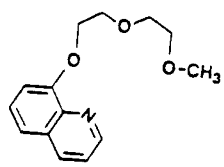
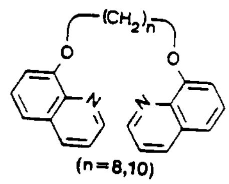

(n=8,10)

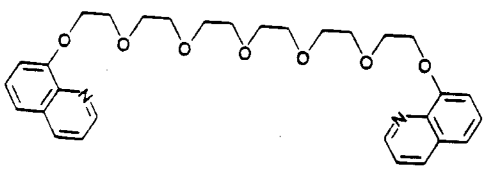
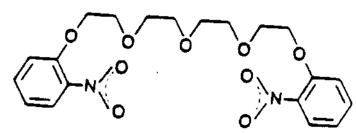

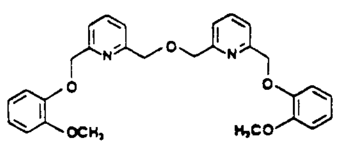
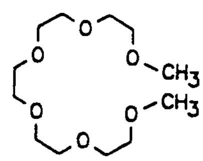
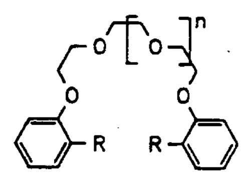

n = 0–2
R = H, $OCH_3$, $NO_2$, COOH, COOEt, CONHR, NHCOR

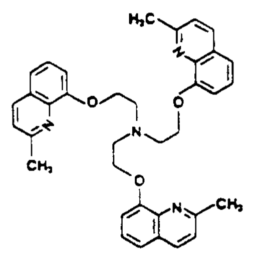

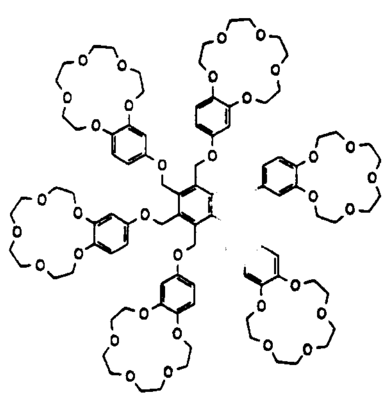
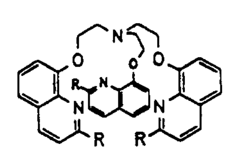

R = H, $CH_3$

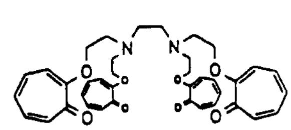

Besonders bevorzugt werden Komplexliganden, die Alkali- und Erdalkali-Ionen komplexieren. Dabei erweisen sich Makrocyclen, vorzugsweise mit einer Ringgröße von 18, die mindestens zwei Stickstoffatome und gegebenenfalls 5 bis 6 Sauerstoffatome als Donorzentren enthalten und bicyclisch oder tricyclisch aufgebaut sind, als besonders geeignet.

Insbesonders bevorzugt sind FLC-Mischungen, enthaltend Komplexliganden der Formel ( I ):

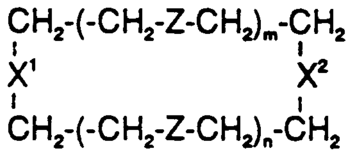

(I)

wobei

| | |
|---|---|
| -Z- | -O- oder -S-, |
| m,n | ganze Zahlen größer Null sind, wobei m + n = 2 bis 6 ist, |
| $-X^1-$, $-X^2-$ | gleich oder verschieden<br>-Z-, -NR-, |

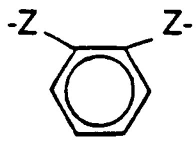 , 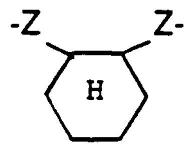

oder

$-X^1-$, $-X^2-$ zusammen

$>N-CH_2(-CH_2-Z-CH_2)_l-CH_2-N<$ oder

$>N-CO(-CH_2-Z-CH_2)_l-CO-N<$ oder

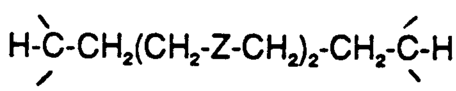

sind,

wobei

| | |
|---|---|
| -R | -Alkyl oder -Alkyloxy mit 1 bis 15 C-Atomen, -Phenyl, -Benzyl oder - Benzoyl und |
| l | 1 oder 2 bedeuten; |

und/oder der Formel ( II ):

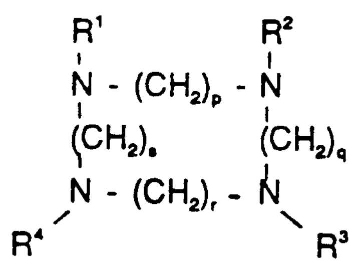

(II)

wobei $-R^1$, $-R^2$, $-R^3$ und $-R^4$ unabhängig voneinander -H, $-(C_1-C_{12})$Alkyl,

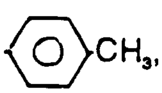 , 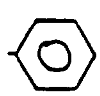 , 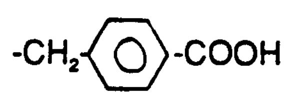 oder 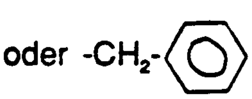

bedeuten und p, q, r, s unabhängig voneinander eine ganze Zahl von 2 bis 4, wobei p + q + r + s = 8 bis 16 ist, bedeuten.

Die Komplexliganden werden bevorzugt in FLC-Mischungen eingesetzt, die als chirale Komponenten Oxiranether- und/oder Oxiranester- und/oder Dioxolan-Derivate enthalten. Von den chiralen Dotierstoffen mit zwei Chiralitätszentren eignen sich sowohl die cis- als auch die trans-Konfigurierten (s. DE-A 36 33 968 und DE-A 37 18 174). Weitere Dotierstoffe, die sich ebenfalls für den Einsatz mit den erfindungsgemäß eingesetzten Komplexliganden eignen, sind beschrieben in DE-A 39 07 601, DE-A 38 32 502, DE-A 38 32 503, DE-A 38 27 599, DE-A 37 13 273, DE-A 37 03 228, DE-A 36 30 933, DE-A 36 18 213, DE-A 36 17 826 sowie DE-A 36 20 049.

Da die erfindungsgemäß verwendeten Komplexliganden den Einsatz von ferroelektrischen Flüssigkristallmischungen mit hohen spontanen Polarisationen ermöglichen und sich diese durch besonders geringe Schaltzeiten auszeichnen, werden die Komplexliganden bevorzugt in FLC-Mischungen mit einer spontanen Polarisation > 30 $nC \cdot cm^{-2}$ verwendet, wie sie z. B. in DE-A 39 09 354 beschrieben sind.

Es hat sich gezeigt, daß die erfindungsgemäßen Komplexliganden stets zu einer Erhöhung der elektrischen Leitfähigkeit führen. Diese ist besonders ausgeprägt, wenn als Komplexliganden Kryptanden eingesetzt werden. In diesem Fall werden auch die optische Hysterese und die Twistzustände besonders effizient beseitigt.

Werden die FLC-Lichtventile im Multiplexverfahren angesteuert, so stellt das Verhältnis ( = Bias) von Zeilen- zu Spaltenspannung (Datenpulshöhe) eine wichtige Größe dar, die den Kontrast im Betrieb entscheidend beeinflußt (siehe T. Harada et al., Japan Display Conference 1986). Dabei erweisen sich hohe Bias-Werte als besonders günstig. Von den erfindungsgemäßen Komplexliganden führen nun insbesondere die Kryptanden zu außergewöhnlich hohen Bias-Werten.

Die erfindungsgemäßen Mischungen enthalten in einer weiteren Ausführungsform mehrere unterschiedliche Komplexliganden, wobei die verschiedenen Komplexliganden jeweils bestimmte Kationen bevorzugt komplexieren können (Zur Frage der Selektivität siehe z. B. M. Hiraoka, Crown Compounds - Their characteristics and applications, Kodansha Ltd., Tokyo, 1982, p.67 ff.). In der FLC-Mischung sind hierbei insgesamt wiederum 0,01 bis 10 Mol-% an Komplexliganden enthalten. Da durch die Einbringung der Komplexliganden oft Probleme mit der Löslichkeit in der FLC-Mischung oder mit der Beeinflussung der flüssigkristallinen Phasen verbunden sind, kann es zum problemlosen Einsatz der Komplexliganden von Vorteil sein, bevorzugt Gemische aus Coronanden und Kryptanden zu verwenden. Auch in diesen Fall werden insgesamt 0,01 bis 10 Mol-% eingesetzt.

Zur Orientierung des Flüssigkristalls werden im allgemeinen organische Materialien eingesetzt, die ein Polyimid oder ein Polyamid als Grundkomponente enthalten (vgl. hierzu Mol. Cryst. Liq. Cryst. 109, I (1984)). Es hat sich jedoch gezeigt, daß eine Orientierungsschicht bestehend aus $SiO_2$ für die erfindungsgemäßen FLC-Mischungen besonders geeignet ist. Die $SiO_2$-Filme werden bevorzugt durch Aufschleudern oder Sprühen bzw. durch Eintauchen in Silizium-organische Verbindungen und anschließende thermische Behandlung bei 100 bis 400 °C erhalten. Das Orientierungsvermögen der $SiO_2$-Filme wird auf konventionelle Weise durch Reiben des Films erreicht (vgl. hierzu DE-A-28 52 395, EP-A 0 046 401, DE-A 27 22 900). Ein weiterer Vorteil der geriebenen $SiO_2$-Filme ist die deutlich verbesserte Isolationsfähigkeit im Vergleich zu Polyimiden und die hohe Transparenz auch bei großer Schichtdicke.

Die beschriebenen Mischungen eignen sich in besonderem Maße als Komponenten für Flüssigkristall-, Schalt- und Anzeigevorrichtungen, wie sie eingangs beschrieben wurden.

Die Erfindung wird durch die nachfolgenden Beispiele näher erläutert:

Beispiele

In den folgenden Beispielen werden die Kryptanden und Coronanden in Konzentrationen von 0,5 Mol-% bis 1,5 Mol-% eingesetzt. Als Beispiele für Coronanden bzw. Kryptanden dienen die nachfolgenden Verbindungen K1 bis K12.

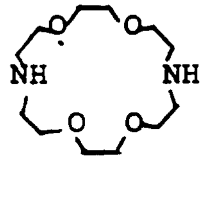

K1

1,7,10,16-Tetraoxa-4,13-diazacyclooctadecan
(Kryptofix® 22)

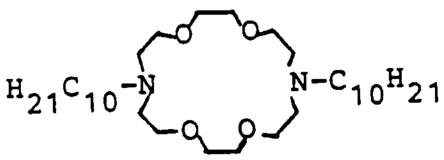

K2

4,13-Didecyl-1,7,10,16-tetraoxa-4,13-diazacyclooctadecan (Kryptofix® 22 DD)

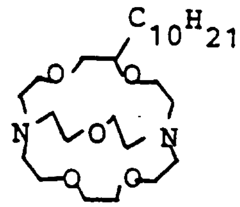

K3

5-Decyl-4,7,13,16,21-pentaoxa-1,10-diazabicyclo[8.8.5]-tricosan (Kryptofix® 221 D)

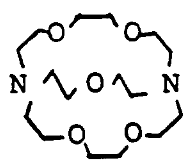

K4

4,7,13,16,21-Pentaoxa-1,1O-diazabicyclo[8.8.5]-tricosan (Kryptofix® 221)

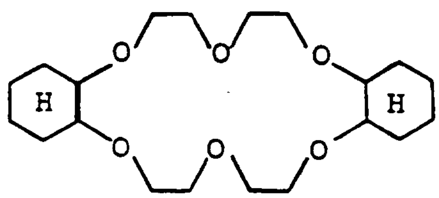

K5

2,5,8,15,18,21-Hexaoxatricyclo[20.4.0.0.$^{9,14}$]hexacosan

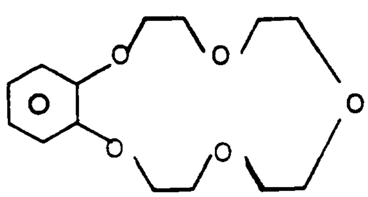

K6

1,4,7,10,13-Pentaoxa[13]orthocyclophan

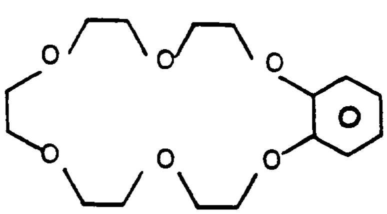

K7

1,4,7,10,13,16-Hexaoxa[16]orthocyclophan

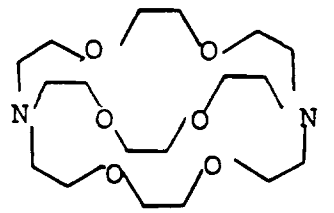

K8

4,7,13,16,21,24-Hexaoxa-1,10-diazabicyclo[8.8.8]hexacosan
(Kryptofix® 222)

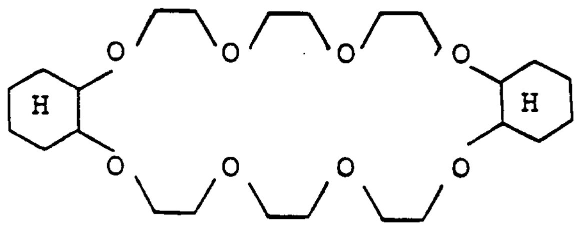

K9

2,5,8,11,18,21,24,27-Octaoxatricyclo[26.4.0.0.$^{12,17}$]dotriacontan

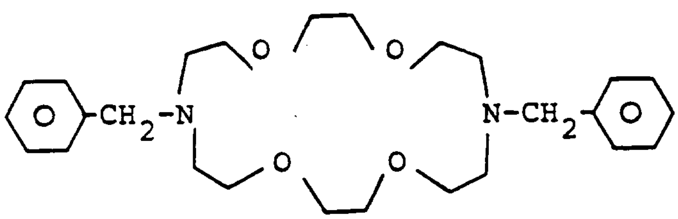

K10

4,13-Dibenzyl-1,7,10,16-tetraoxa-4,13-diazabicyclooctadecan

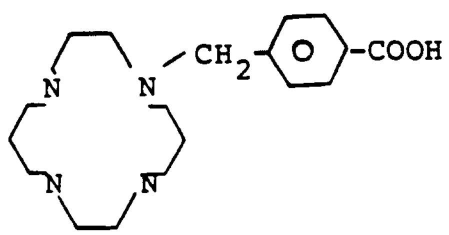

K11

1-[4-Carboxyl-benzyl]-1,4,7,11-tetraza-cyclotetradecan

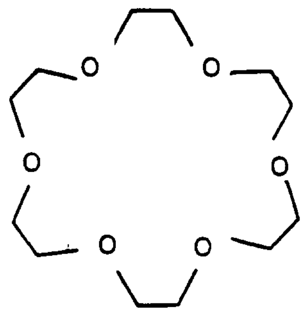

K12

1,4,7,10,13,16-Hexaoxa-cyclooctadecan
(18-Krone-6)

In den Beispielen werden drei Flüssigkristall-Grundmischungen A, B und C, verschiedene chirale Dotierstoffe sowie eine FLC-Mischung, die einen Farbstoff enthält (guest-host-System) eingesetzt.

Die LC-Mischung A enthält folgende drei Komponenten (in Mol-%):

33.75 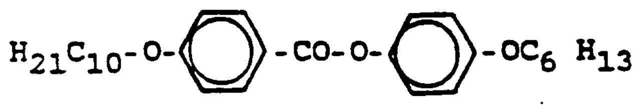 (A 1)

41.25 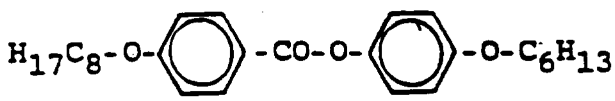 (A 2)

25.00 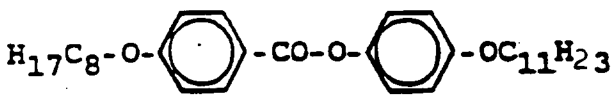 (A 3)

Die Mischung zeigt folgende Phasenfolge:

$S_c$ 72 $S_A$ 74 N 88 I

Die LC-Mischung B enthält folgende acht Komponenten (in Mol-%):

5.11 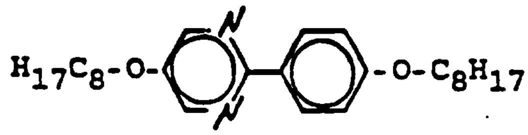

11.67 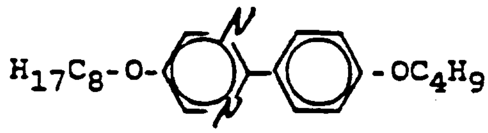

9.28 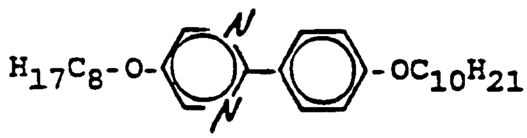

17.50 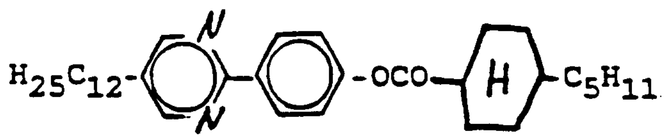

17.70 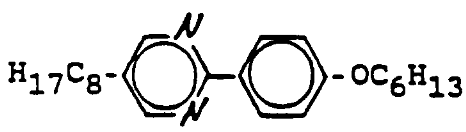

11.80 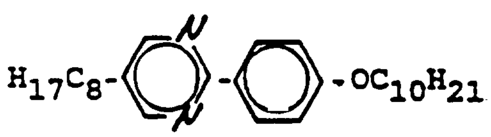

15.88 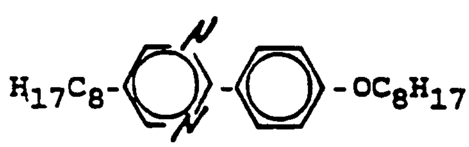

11.06 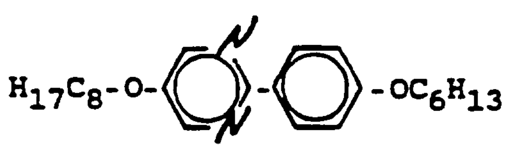

Die Mischung zeigt folgende Phasenfolge:

$S_c$ 69 $S_A$ 76 N 92 I

Die LC-Mischung C enthält folgende acht Komponenten (in Mol-%)

13.39 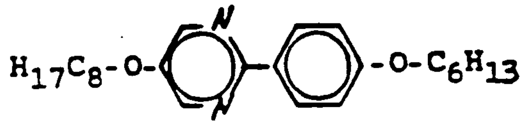

4.49 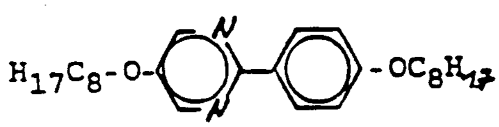

14.78 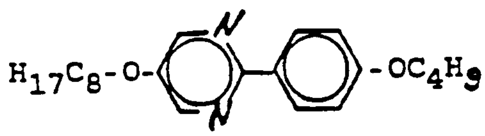

8.14 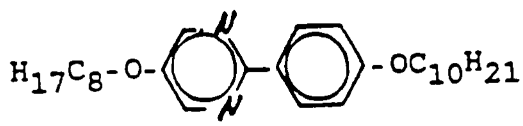

8.16 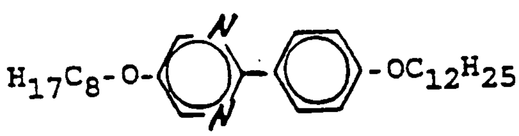

19.04 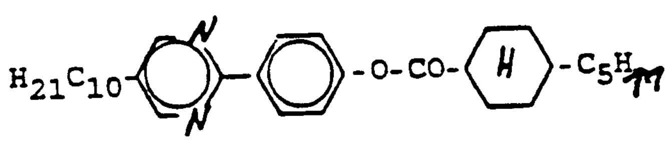

12.00 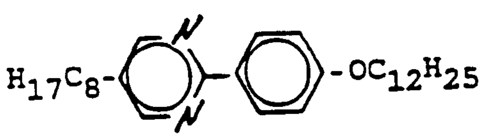

20.00 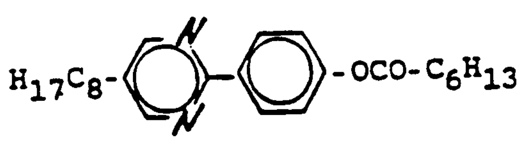

Die Mischung zeigt folgende Phasenfolge

$S_c$ 71 $S_A$ 78 N 93 I

Als Beispiele für Dotierstoffe werden folgende Verbindungen eingesetzt:

Dotierstoff D 1

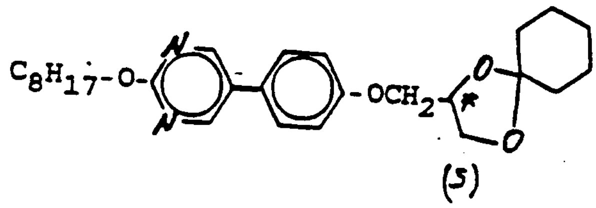

Dotierstoff D2

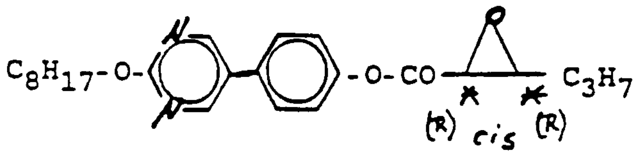

Dotierstoff D 3

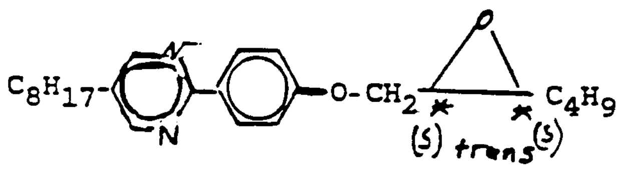

Dotierstoff D4

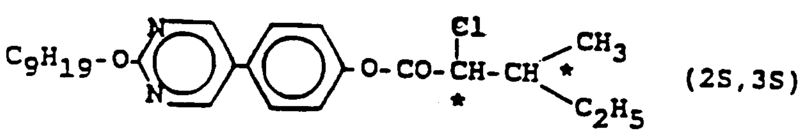

Dotierstoff D5

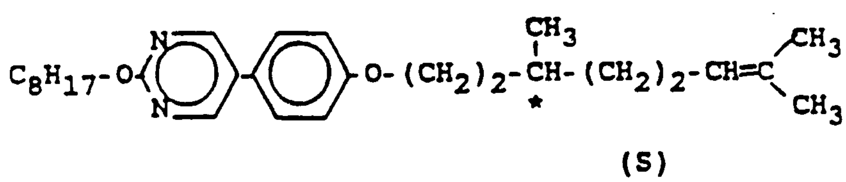

Aus den genannten LC-Grundmischungen, Dotierstoffen und Zusatzstoffen K1 bis K12 wurden unter Berücksichtigung der vorstehenden Daten die folgenden erfindungsgemäßen Beispiele erstellt:

Beispiel 1

Wie eingangs beschrieben, führen Twist-Zustände zu einer starken Kontrastverminderung, insbesondere dadurch, daß der lichtsperrende Zustand eine beträchtliche Aufhellung erfährt. Im Vergleich zu uniformen Zuständen besitzen Twist-Zustände zudem einen kleineren Winkel (2 $\theta_{eff}$) zwischen beiden Schaltzuständen. Da die Transmission des hellen Schaltzustands proportional zu $\sin^2$ (4 $\theta_{eff}$) ist und 2 $\theta_{eff}$ idealerweise 45° betragen sollte, nimmt mit kleinem 2 $\theta_{eff}$ auch die Helligkeit eines Displays ab. In der "Chevron"-Textur erhält man im Vergleich mit der "Bookshelf"-Geometrie außerdem eine Reduktion des Schaltwinkels, als Folge der spezifischen Lagenstruktur.

Die Ausbildung von Twist-Zuständen führt nicht nur bei FLC-Mischungen zu kleinen Winkeln zwischen den Memory-Zuständen und grauen Dunkelzuständen, sondern auch bei LC-Mischungen mit achiral,

geneigt-smektischen Phasen.

Die achirale LC-Mischung A ($S_c$-Phase) wird zur Unterdrückung von Twist-Zuständen mit 2 Mol-% des Coronanden K5 versetzt und in eine kommerziell erhältliche, mit Elektroden versehene, 2 $\mu$m dicke Testzelle mit geriebenem Polyimid als Orientierungsschicht (Hersteller E.H.C. Inc., Tokyo) gefüllt. Die Orientierung des Flüssigkristalls erreicht man durch langsames Abkühlen der Testzelle, wobei die in der Einleitung beschriebene Phasenfolge auftritt. Zur Charakterisierung des Effekts wird der Winkel (2 $\theta_{eff}$) zwischen beiden Memory-Zuständen in der "Chevron"-Textur herangezogen. Gemessen werden die Winkel, indem die gefüllte Testzelle in den Strahlengang eines Polarisationsmikroskops gebracht wird, das mit einem Drehtisch mit Winkelskala ausgestattet ist. Die entsprechenden Winkel der Mischung mit und ohne Coronand sind in Tabelle 1 zusammengefaßt. Durch Zugabe des Coronanden K5 erhöht sich dieser Winkel von 20° auf 28°.

Beispiel 2

Die FLC-Mischung M1 besitzt folgende Zusammensetzung (in mol-%):

| | |
|---|---|
| LC-Mischung B | 78,3 % |
| Dotierstoff D1 | 4,7 % |
| Dotierstoff D2 | 9,0 % |
| Dotierstoff D3 | 8,0 % |

und die Phasenfolge $S_c^*$ 60 $S_A^*$ 70 $N^*$ 89 I mit einer spontanen Polarisation von 55 $nC \cdot cm^{-2}$.

Der effektive Schaltwinkel (2 $\theta_{eff}$), die Transmission des Hell- und Dunkelzustandes und der optische Kontrast werden für verschiedene Kryptanden und Coronanden, die der FLC-Mischung M1 in jeweils 1 Mol-% zugesetzt wurden, untersucht. Dazu befindet sich die mit Elektroden versehene Meßzelle (Hersteller E.H.C. Inc., Tokyo) mit der entsprechenden FLC-Mischung in einem Polarisationsmikroskop, das mit einem Drehtisch ausgestattet ist. Bei Ansteuerung der Zelle kann der effektive Schaltwinkel durch Drehen des Mikroskoptisches zwischen den beiden Schaltzustäden ermittelt werden.

Die Transmission von Hell- und Dunkelzustand wird mit Hilfe einer Photodiode gemessen, die im Strahlengang des Polarisationsmikroskops angebracht ist. Der optische Kontrast errechnet sich über das Verhältnis der Transmission von Hell- und Dunkelzustand.

Die Ergebnisse sind in Tabelle 2 zusammengestellt. Nach Zugabe der entsprechenden Kryptanden bzw. Coronanden zeigt die FLC-Mischung M1 deutlich bessere Eigenschaften, was sich in den entsprechenden Meßergebnissen widerspiegelt.

Beispiel 3

Die FLC-Mischung M2 hat folgende Zusammensetzung (in Mol-%)

| | |
|---|---|
| LC-Mischung B | 84,0 % |
| Dotierstoff D1 | 7,7 % |
| Dotierstoff D2 | 8,3 % |

und die Phasenfolge $S_c^*$ 63 $S_A^*$ 73 $N^*$ 81 I bei einer spontanen Polarisation von 37 $nC \cdot cm^{-2}$. Zur Unterdrückung der optischen Hysterese wurde der FLC-Mischung M2 1 Mol-% des Komplexliganden K8 zugesetzt. Nach Zugabe des Kryptanden K8 erhielt man die Phasenfolge $S_c^*$ 58 $S_A^*$ 71 $N^*$ 78 I bei einer spontanen Polarisation von 36 $nC \cdot cm^{-2}$. Fig. 1 zeigt die optischen Schaltantworten der FLC-Mischung M2 mit und ohne Kryptand in 2,1 $\mu$m dicken Test-Zellen (Hersteller E.H.C. Inc., Tokyo), die sich in einem Polarisationsmikroskop befinden. Der Schaltvorgang der Testzellen wurde mit Hilfe einer schnellen Photodiode erfaßt. Fig. 1 zeigt die Pulsadressierung (CH1) und die optische Transmission (CH2) einer mit der FLC-Mischung M2 gefüllten Testzelle bei einer Temperatur von 25°C und variablen Pulsabständen. Die linke Seite zeigt die reine Mischung M2, während die Ergebnisse mit 1 Mol-% Kryptand K8 auf der rechten Seite abgebildet sind.

Bei einer Pulsadressierung bei einer Temperatur von 25°C wurden bipolare Pulse einer Gesamtbreite von 200 $\mu$s und einer Höhe von 4 V/$\mu$m verwendet. Die Zwischenräume zwischen den Pulsen betrugen a) 1000 ms, b) 100 ms und c) 20 ms. Man erkennt deutlich, daß die FLC-Mischung, die den Kryptanden K8

enthält (rechte Seite der Fig. 1), ein verbessertes Schaltverhalten zeigt und auch für große Pulsabstände noch schaltbar ist (a). Auf korrespondierenden mikroskopischen Aufnahmen der Testzellen (Fig. 2) sind im Fall der FLC-Mischung M2 nichtschaltende Bereiche zu sehen, die bei Zugabe von K8 nur in deutlich vermindertem Ausmaß auftreten. Fig. 2 zeigt mikroskopische Aufnahmen der Testzellen gefüllt mit der FLC-Mischung M2 (linke Seite) und der FLC-Mischung M2, die zusätzlich 1 Mol-% des Kryptanden K8 enthält (rechte Seite). a) zeigt den stabilen Dunkelzustand und b) den stabilen Hellzustand. Die konstanten Parameter lauten: Feldstärke 4 V/µm, Pulsbreite 200 µs, Pulsabstand 50 ms bei einer Temperatur von 25 °C.

Folgendes Testverfahren diente dazu, mit den verwendeten Testzellen eine Meßgröße für das Auftreten von "Geisterbildern" in den FLC-Displays zu erhalten:
Es werden bipolare Pulse gleicher Polaritätsabfolge einer Gesamtbreite von 200 µs und einer Höhe von 4 V/µm verwendet. Der Pulsabstand beträgt 20 ms. Die Polaritätsabfolge wechselt alle 5 Sekunden. Fig. 3 zeigt das Schaltverhalten bei Verwendung bipolarer Pulse gleicher Polaritätsabfolge, die nach fünf Sekunden wechselt. Auch bei dieser Pulsadressierung ist der Vorteil der erfindungsgemäßen FLC-Mischung zu erkennen, der sich darin äußert, daß das Umschalten von Hell nach Dunkel und umgekehrt sehr schnell und ohne das störende Auftreten sogenannter Nachzieheffekte erfolgt. Wiederum ist die optische Transmission einer mit der FLC-Mischung gefüllten Testzelle bei einer Temperatur von 25 °C gegen die Zeit aufgetragen. a) FLC-Mischung M2, b) FLC-Mischung M2 mit 1 Mol-% des Kryptanden K8.

Beispiel 4

Die FLC-Mischung M3 hat folgende Zusammensetzung (in Mol-%)

| | |
|---|---|
| LC-Mischung C | 91,7 |
| Dotierstoff D4 | 7,0 |
| Dotierstoff D5 | 1,3 |

und die Phasenfolge $S_c^*$ 69 $S_A^*$ 75 $N^*$ 82 I. Sie weist eine spontane Polarisation von -9,6 $nC \cdot cm^{-2}$ auf.

Das oben beschriebene Testschema zur Charakterisierung der "Geisterbilder" zeigte auch bei diesem Beispiel deutlich die Vorteile des erfindungsgemäßen Einsatzes von Komplexliganden für Ionen, was in Fig. 4 in analoger Weise wie in Fig. 3 dargestellt ist.

Die optische Transmission einer mit der FLC-Mischung M3 gefüllten Testzelle bei einer Temperatur von 25 °C ist gegen die Zeit aufgetragen. Es werden bipolare Pulse gleicher Polaritätsabfolge einer Gesamtbreite von 200 µs und einer Höhe von 12 V/µm verwendet. Der Pulsabstand beträgt 20 ms. Die Polaritätsabfolge wechselt alle 5 Sekunden a) FLC-Mischung M3, b) FLC-Mischung M3 mit 1 Mol-% des Komplexliganden K8. Auch hier erfolgt das Umschalten von Dunkel nach Hell sofort und ohne Nachzieheffekte im Vergleich zu der FLC-Mischung M3, die keinen Komplexliganden enthält.

Beispiel 5

Die FLC-Mischung M4 besitzt folgende Zusammensetzung (in Mol-%):

| | |
|---|---|
| LC-Mischung C | 87,67 % |
| Dotierstoff D1 | 4,53 % |
| Dotierstoff D2 | 2,70 % |
| Dotierstoff D3 | 5,10 % |

und die Phasenfolge $S_c^*$ 61 $S_A^*$ 69 $N^*$ 85 I mit einer spontanen Polarisation von 30 $nC \cdot cm^{-2}$.

Der FLC-Mischung M4 werden die Kryptanden bzw. Coronanden K8 (0,5 Mol-%) und K5 (1,5 Mol-%) zugesetzt (Mischung M4'). Die verwendeten Testzellen (eigener Zellenmusterbau) sind sowohl mit einem konventionellen Polyimid als auch mit einem teilfluorierten Polyimid als Orientierungsmaterial beschichtet.

Zur Beurteilung der erfindungsgemäßen Mischungen dienen der effektive Schaltwinkel, die Transmission des Hell- und Dunkelzustandes sowie der optische Kontrast.

Tabelle 3 zeigt den Vergleich der FLC-Mischung M4 mit der modifizierten FLC-Mischung (M4'). Der effektive Tiltwinkel und die damit verbundene Transmission des Hellzustandes nehmen deutlich zu. Aber auch die Transmission des Dunkelzustandes verringert sich signifikant, wodurch insgesamt eine drastische

Steigerung des optischen Kontrasts zustande kommt.Behandelt man FLC-Zellen mit elektrischen Wechselfeldern bestimmter Feldstärke und Frequenz (z. B. 10 Hz, 15 V/µm), so kann eine Änderung der smektischen Lagenstruktur erzielt werden, ("Bookshelf"-Geometrie siehe Dübal et al. in "Proceedings of the 6th International Symposium on Elektrets", Oxford, England 1988 Eds. D.K. Das-Gypta and A.W. Pattullo), die sich durch einen Schaltwinkel auszeichnet, der nahe bei 45° liegt. Mit dieser Textur läßt sich also eine Transmission des Hellzustands von nahezu 100 % erzielen. Die Ergebnisse der FLC-Mischung M4 mit und ohne Coronanden bzw. Kryptanden sind in Tabelle 4 zusammengestellt. Auch hier ist eine deutliche Verbesserung des Dunkelzustands und somit des optischen Kontrasts zu erkennen.

Die FLC-Mischung M4 und die modifizierte FLC-Mischung M4' werden in zwei gleiche, kommerziell erhältliche, mit Elektroden versehene FLC-Zellen (der Firma E.H.C.) gefüllt, deren Orientierungsschichten beidseitig aus $SiO_x$ (83° Schrägbedampfung) bestehen.

Die Zellen werden bei Raumtemperatur alternierenden bipolaren elektrischen Pulsen der Gesamtdauer von 1 ms unterworfen. Ab einer bestimmten kritischen Pulsamplitude (Feldstärke) schaltet die mit der erfindungsgemäßen Mischung gefüllte Zelle zwischen den bekannten bistabilen und uniformen Schaltzuständen hin und her. Bei der Vergleichszelle (nur M4) dagegen treten bei diesen Amplituden zwei Twistzustände auf, die sich in ihrem optischen Transmissionsvermögen kaum unterscheiden und deshalb keinen guten Kontrast bilden.

Erst bei sehr viel höheren Amplituden schaltet auch die Vergleichszelle (FLC-Mischung M4 ohne Zusätze) mit hohem Kontrast zwischen zwei uniformen Zuständen; jedoch erreicht auch hier der Kontrast nicht den Wert der erfindungsgemäßen Mischung. Die vergleichende Gegenüberstellung ist in Fig. 5 graphisch dargestellt. Der Kontrast (CR) ist gegen die Feldstärke E (in V/µm) aufgetragen. Die Kurve (a) entspricht der erfindungsgemäßen FLC-Mischung, die Kurve (b) der FLC-Mischung M4 ohne Zusatz von Kryptanden bzw. Coronanden.

Beispiel 6

Der FLC-Mischung M4 werden jeweils 1 Mol-% der Komplexliganden K5 (FLC-Mischung 6A), K8 (FLC-Mischung 6B) und K12 (FLC-Mischung 6C) zugesetzt. Zur Charakterisierung des "Geisterbild"-Verhaltens wird das in Beispiel 3 beschriebene Testschema verwendet. Das Umschalten von Hell nach Dunkel (in der "Chevon"-Geometrie) sollte sehr schnell und ohne Nachzieheffekte erfolgen. Die Zeitkonstante, mit der sich der helle Speicherzustand bei Schalten von Dunkel nach Hell einstellt, kann als charakteristische Größe zur Beurteilung eines Komplexliganden herangezogen werden. In Tabelle 5 ist die relative Effektivität der Komplexliganden K5, K8 und K12 in der Testmischung M4 zusammengefaßt. Dabei wurde die Wirkung von K8 (Zeitkonstante des Schaltens) auf eins festgelegt.

Tabelle 5

| FLC-Mischung | Effektivität |
|---|---|
| 6A | 0,18 |
| 6B | 1,00 |
| 6C | 0,60 |

Die Tabelle zeigt deutlich, daß die Kryptanden zur Vermeidung einer optischen Hysterese besonders geeignet sind.

Beispiel 7 ("guest-host"-Zelle) (Farbstoff-Zelle)

Eine erfindungsgemäße ferroelektrische Mischung M5 besteht aus folgenden 14 Komponenten (in Gew.-%):

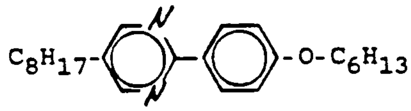

11,8

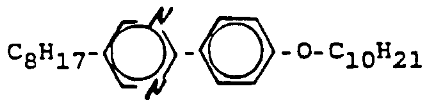

9,1

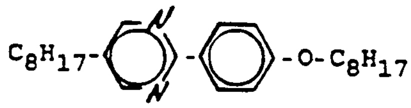

11,4

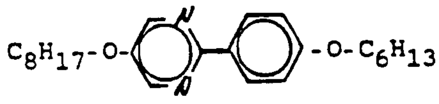

7,7

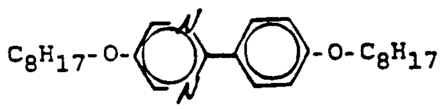

3,8

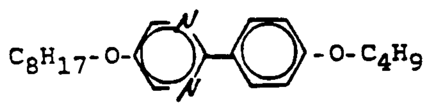

7,6

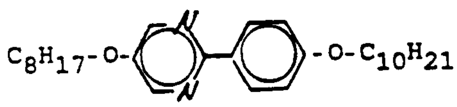

7,4

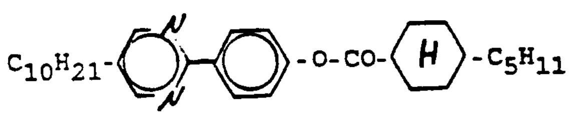

24,6

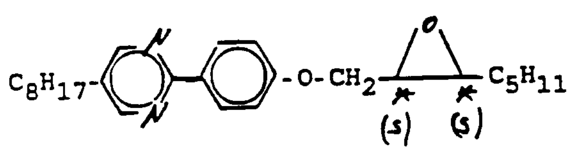

5,6

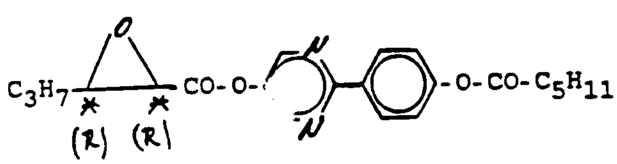

2,0

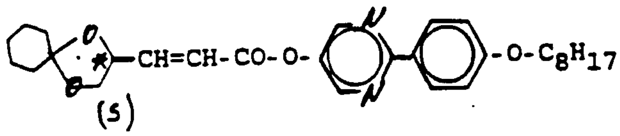

1,2

| | |
|---|---|
| Verbindung K8 | 1,5 |
| Verbindung K5 | 1,5 |
| blauer in LC-Material löslicher dichroitischer Farbstoff | 4,8 |

und weist folgende Phasen auf (in °C):

X -4,5 $S_c^*$ 66,3 $S_A^*$ 69,6 $N^*$ 94 I

Diese Mischung wird in eine Zelle (3,4 µm innerer Scheibenabstand) mit parallel geriebenen Orientierungsschichten aus Polyimid gefüllt und ca. 3 Minuten lang einer Feldbehandlung mit Rechteckpulsen einer Frequenz von 10 Hz und einer Feldstärke ± 10 V/µm unterzogen.

Unter einem Durchlichtmikroskop wird eine Polarisationsfolie so zur thermostatisierten Zelle orientiert, daß eine minimale Lichttransmission vorliegt (Polarisator und Vorzugsorientierung der Moleküle sind gekreuzt.

Nach einem Schaltimpuls (8 V/µm 500 µs) nehmen die Moleküle eine um 47° gedrehte Lage zu dieser Position ein und das Licht wird schwächer absorbiert.

Um die Beleuchtung auf den Farbstoff abzustimmen, wird bei der Kontrastmessung ein Filter verwendet (Hersteller: Schott: 75760/632 nm). Der Kontrast, d. h. das Verhältnis der Transmission von Hellzustand zu Dunkelzustand wird mit einer Photodiode gemessen und liegt bei dieser Zelle bei 24 zu 1.

Als Vergleichsbeispiel wurde eine mit Polyimid beschichtete Zelle (3,0 µm innerer Scheibenabstand) mit einer Mischung gefüllt, die sich von der erfindungsgemäßen Mischung nur dadurch unterscheidet, daß sie keinen Coronanden bzw. Kryptanden enthält.

Der nach der zuvor beschriebenen Weise ermittelte Kontrast dieser Mischung liegt bei 11 zu-1. Die Verwendung von Komplexbildner führt demnach zu einer deutlichen Verbesserung des Kontrastes.

Dieses Beispiel belegt, daß Coronanden bzw. Kryptanden in LC-Mischungen mit Farbstoffen für die Anwendung in "guest host"-Displays zu einer deutlichen Verbesserung führen.

Beispiel 8

Zum Nachweis der vorteilhaften Eigenschaften der erfindungsgemäßen FLC-Mischung in Verbindung mit SiO-Orientierungsschichten wurden eigene Testzellen hergestellt. Dazu wurden Glasplatten, die mit einer 4 x 4 $mm^2$ große Elektrodenfläche aus Indium-Zinn-Oxid (ITO) beschichtet waren, mit einer wäßrigen Tensid-Lösung und anschließend mit Alkohol gereinigt und danach mit einer verdünnten Si-organischen Verbindung beschichtet. Das Aufbringen wurde mit einem "Spin-Coater" durchgeführt, kann aber auch mit anderen Methoden, z. B. Druck- oder Tauchverfahren, erfolgen. Die ca. 20 nm dicke Schicht wurde bei einer Temperatur von ca. 250°C getempert und anschließend mit einem samtartigen Stoff gerieben. Die so erhaltenen Gläser werden zu Testzellen zusammengeklebt. Als Ausgangsverbindungen für die Orientierungsschichten diente ein $SiO_2$-enthaltendes Material wie beispielsweise ®Liquicoat (Hersteller: Merck, Darmstadt) und ®Silan-TPN (Hersteller: Wacker Chemie, München). Die selbst hergestellten Testzellen wurden mit konventionellen Testzellen (Hersteller E.H.C. Inc., Tokyo) mit einer Polyimid-Orientierungsschicht verglichen. Dazu wurde die FLC-Testmischung M4 verwendet, der 1,5 Mol-% K8 zugesetzt wurden. Zur Beurteilung der erfindungsgemäßen Mischungen in Verbindung mit einer $SiO_2$-Orientierungsschicht dienen die Transmission des Hell- und Dunkelzustands, der optische Kontrast, der Schaltwinkel 2 $\theta_{eff}$ sowie der maximal mögliche Bias (Verhältnis von Zeilen- zu Datenspannung). Die Ergebnisse für die "Chevron"- und "Bookshelf"-Geometrie sind in Tabelle 6 zusammengefaßt. Gegenüber konventionellem Polyimid erhält man mit $SiO_2$-Orientierungsschichten und den erfindungsgemäßen FLC-Mischungen einen deutlich höheren Kontrast. Ein weiterer Vorteil liegt in der besseren Isolationsfähigkeit von $SiO_2$-Schichten, da elektrische Kurzschlüsse ein ernstzunehmendes Problem darstellen.

Tabelle 1

| Vergleich des effektiven Schaltwinkels bei LC-Grundmischung A und bei erfindungsgemäßer Mischung (A + Coronand) | | |
|---|---|---|
| | LC-Mischung A | LC-Mischung A + 2 Mol-% K5 |
| 2 $\theta_{eff}$ [°C] | 20 | 28 |

Tabelle 2

| Komplexligand | FLC-Mischung M1 mit jeweils 1 Mol-% Coronand bzw. Kryptand | | | | | | | | | | |
|---|---|---|---|---|---|---|---|---|---|---|---|
| | ohne | K1 | K2 | K3 | K4 | K5 | K6 | K7 | K9 | K10 | K11 |
| 2 $\theta_{eff}$ [°] | 15 | 24 | 22 | 22 | 20 | 22 | 20 | 22 | 24 | 23 | 20 |
| Transmission Dunkel (%) | 8,0 | 1,9 | 1,1 | 2,0 | 3,6 | 0,7 | 2,5 | 1,0 | 0,2 | 1,5 | 0,6 |
| Transmission Hell (%) | 28 | 55 | 51 | 50 | 43 | 49 | 43 | 48 | 58 | 53 | 42 |
| Kontrast | 3,5 | 29 | 46 | 25 | 12 | 70 | 17 | 48 | 290 | 35 | 70 |

Tabelle 3 FLC-Mischung M4 mit/ohne Coronand bzw. Kryptand in der "Chevron"-Geometrie (Die FLC-Mischung M4' unterscheidet sich von M4 durch Zusatz von 0,5 % K8 und 1,5 % K5)

| | Testzellen mit Polyimid als Orientierungsschicht | | Testzellen mit fluoriertem Polyimid als Orientierungsschicht | |
|---|---|---|---|---|
| | M4 | M4' | M4 | M4' |
| $2\ \theta_{eff}$ [°] | 14 | 23 | 14 | 28 |
| Transmission Dunkel (%) | 1,9 | 0,21 | 4,9 | 0,4 |
| Transmission Hell (%) | 26 | 44 | 27 | 68 |
| Kontrast | 13 | 210 | 5,5 | 170 |

Tabelle 4 FLC-Mischung mit/ohne Kryptand bzw. Coronand in der "Bookshelf"-Geometrie (Die FLC-Mischung M4' unterscheidet sich von M4 durch Zusatz von 0,5 % K8 und 1,5 % K5). Die Testzellen wurden vor der Messung mit einem Rechteckfeld (10 Hz, 30 V) behandelt

| | Testzellen mit Polyimid als Orientierungsschicht | | Testzellen mit fluoriertem Polyimid als Orientierungsschicht | |
|---|---|---|---|---|
| | M4 | M4' | M4 | M4' |
| 2 $\theta_{eff}$ [°] | 50 | 50 | 50 | 50 |
| Transmission Dunkel (%) | 2,1 | 0,9 | 7,1 | 0,3 |
| Transmission Hell (%) | 88 | 97 | 88 | 98 |
| Kontrast | 42 | 108 | 12 | 327 |

Tabelle 6

| Chevron-Geometrie: | | | |
|---|---|---|---|
| | Testzelle mit Orientierungsschicht | | |
| | Polyimid | ®Liquicoat | Silan-TPN |
| Transmission Hell (%) | 24 | 25 | 25 |
| Transmission Dunkel (%) | 0,6 | 0,4 | 0,5 |
| Kontrast | 40 | 62,5 | 50 |
| maximaler Bias | -- | -- | -- |
| 2 $\theta_{eff}$ | 20° | 23° | 24° |
| Bookshelf-Geometrie: | | | |
| | Testzelle mit Orientierungsschicht | | |
| | Polyimid | ®Liquicoat | Silan-TPN |
| Transmission Hell (%) | 92 | 94 | 96 |
| Transmission Dunkel (%) | 2,5 | 0,8 | 0,6 |
| Kontrast | 37 | 117 | 160 |
| maximaler Bias | 4 | 3,5 | 5 |
| 2 $\theta_{eff}$ | 53° | 52° | 52° |

Zu Figur 5

(a) Der Kontrast (CR) einer mit der erfindungsgemäßen Mischung M4' gefüllten Zelle von E.H.C. mit schräg aufgedampften $SiO_x$ als der Orientierungsschicht ist in Abhängigkeit von der Amplitude (Feldstärke E) der zum Umschalten verwendeten bipolaren Schaltpulse dargestellt.

(b) Der Kontrast (CR) einer mit der Vergleichsmischung M4 gefüllten Zelle wird unter den gleichen Bedingungen wie (a) gezeigt.

**Patentansprüche**

**Patentansprüche für folgende Vertragsstaaten : AT, BE, DK, ES, GR, IT, LU, SE**

**1.** Ferroelektrische Flüssigkristallmischung bestehend aus mindestens zwei Komponenten, dadurch gekennzeichnet, daß sie als eine Komponente mindestens einen Komplexliganden für Ionen enthält.

**2.** FLC-Mischung gemäß Anspruch 1, dadurch gekennzeichnet, daß sie mindestens einen Komplexliganden für Kationen enthält.

**3.** FLC-Mischung gemäß Anspruch 1, dadurch gekennzeichnet, daß die Komplexliganden elektrisch neutrale Verbindungen sind.

**4.** FLC-Mischung gemäß Anspruch 1, dadurch gekennzeichnet, daß die Komplexliganden Kationen komplexieren und mindestens zwei Stickstoff- und/oder Sauerstoff- und/oder Schwefel- und/oder Phosphor-Donorzentren aufweisen.

**5.** FLC-Mischung gemäß Anspruch 1, dadurch gekennzeichnet, daß die Komplexliganden medio- oder makrocyclische Verbindungen darstellen.

**6.** FLC-Mischung gemäß Anspruch 1, dadurch gekennzeichnet, daß die Komplexliganden Kryptanden sind.

**7.** FLC-Mischung gemäß Anspruch 1, dadurch gekennzeichnet, daß die Komplexliganden Coronanden sind.

**8.** FLC-Mischung gemäß Anspruch 1, dadurch gekennzeichnet, daß die Komplexliganden Podanden sind.

**9.** FLC-Mischung gemäß Anspruch 1, dadurch gekennzeichnet, daß die Komplexliganden bicyclische Verbindungen sind, die mindestens zwei Stickstoffatome enthalten.

**10.** FLC-Mischung gemäß Anspruch 1, dadurch gekennzeichnet, daß die Komplexliganden bicyclische oder tricyclische Verbindungen sind.

**11.** FLC-Mischung gemäß Anspruch 1, dadurch gekennzeichnet, daß die Komplexliganden bicyclische oder tricyclische Verbindungen sind, die mindestens zwei Stickstoffatome sowie mindestens vier Sauerstoffatome enthalten.

**12.** FLC-Mischung gemäß Anspruch 1, dadurch gekennzeichnet, daß sie mindestens zwei verschiedene Komplexliganden für Ionen enthält.

**13.** FLC-Mischung gemäß Anspruch 1, dadurch gekennzeichnet, daß sie mindestens einen Komplexliganden für Alkali- und/oder Erdalkalimetallionen enthält.

**14.** FLC-Mischung gemäß Anspruch 1, dadurch gekennzeichnet, daß sie mindestens zwei verschiedene Komplexliganden für unterschiedliche Kationen enthält.

**15.** FLC-Mischung gemäß Anspruch 1, dadurch gekennzeichnet, daß sie als Komplexliganden eine Verbindung der allgemeinen Formel (I) enthält,

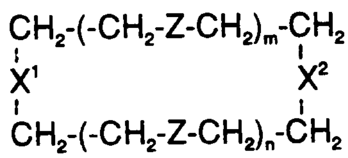

(I)

wobei

| | |
|---|---|
| -Z- | -O- oder -S-, |
| m,n | ganze Zahlen größer Null sind, wobei m + n = 2 bis 6 ist, |
| $-X^1-$, $-X^2-$ | gleich oder verschieden |
| | -Z-, -NR-, |

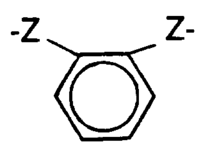 , 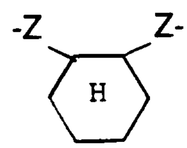

oder

$-X^1-$, $-X^2-$ zusammen

$>N-CH_2(-CH_2-Z-CH_2)_l-CH_2-N<$ oder

$>N-CO(-CH_2-Z-CH_2)_l-CO-N<$ oder

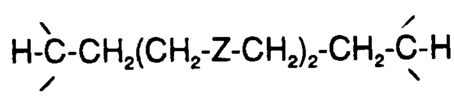

sind,

wobei

| | |
|---|---|
| -R | -Alkyl oder -Alkyloxy mit 1 bis 15 C-Atomen, -Phenyl, -Benzyl oder - Benzoyl und |
| l | 1 oder 2 bedeuten. |

**16.** FLC-Mischung gemäß Anspruch 1, dadurch gekennzeichnet, daß sie als Komplexliganden eine Verbindung der allgemeinen Formel (II) enthält

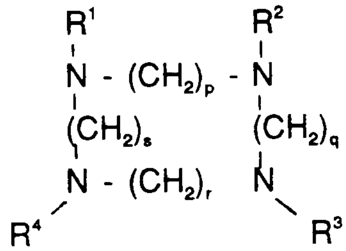

(II)

wobei $-R^1$, $-R^2$, $-R^3$ und $R^4$ unabhängig voneinander -H, $-(C_1-C_{12})$Alkyl,

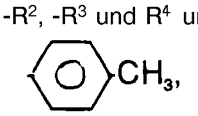 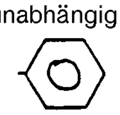 , 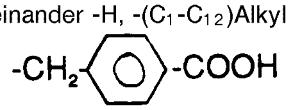 oder 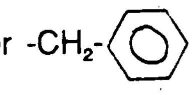

bedeuten und p, q, r, s unabhängig voneinander eine ganze Zahl von 2 bis 4, wobei $p+q+r+s = 8$ bis 16 ist, bedeuten.

**17.** FLC-Mischung gemäß Anspruch 1, dadurch gekennzeichnet, daß sie 0,01 bis 10 Mol-% mindestens eines Komplexliganden enthält.

**18.** FLC-Mischung gemäß Anspruch 1, dadurch gekennzeichnet daß sie eine spontane Polarisation von mindestens 35 $nC \cdot cm^{-2}$ aufweist.

**19.** Verwendung von ferroelektrischen Flüssigkristallmischungen gemäß Anspruch 1 in elektrooptischen Schalt- und Anzeigevorrichtungen.

**20.** Verwendung von ferroelektrischen Flüssigkristallmischungen gemäß Anspruch 1 in SS-FLC-Zellen mit einer Schichtdicke von 1 bis 10 $\mu$m.

**21.** Flüssigkristall-Schalt- und -Anzeigevorrichtung enthaltend ein ferroelektrisches flüssigkristallines Medium, Trägerplatten, Elektroden, mindestens eine Orientierungsschicht sowie gegebenenfalls zusätzliche Hilfsschichten dadurch gekennzeichnet, daß das ferroelektrische flüssigkristalline Medium eine FLC-Mischung darstellt, die mindestens eine Verbindung enthält, die einen Komplexliganden für Ionen darstellt.

**22.** Flüssigkristall-Schalt- und -Anzeigevorrichtung gemäß Anspruch 21, dadurch gekennzeichnet, daß die Schalt- und Anzeigevorrichtung eine SSFLC-Zelle mit einer FLC-Schichtdicke von 1 bis 20 $\mu$m ist und die FLC-Mischung als Komplexliganden mindestens eine medio- oder makrocyclische Verbindung enthält.

**23.** Flüssigkristall-Schalt- und -Anzeigevorrichtung gemäß Anspruch 21, dadurch gekennzeichnet, daß die Schaf- und Anzeigevorrichtung eine SSFLC-Zelle mit einer FLC-Schichtdicke von 1 bis 10 $\mu$m ist und die FLC-Mischung als Komplexliganden mindestens einen Kryptanden und/oder Coronanden enthält.

**24.** Flüssigkristall-Schalt- und Anzeigevorrichtung gemäß Anspruch 21, dadurch gekennzeichnet, daß die Orientierungsschicht aus einem $SiO_2$-enthaltenden Material besteht.

**Patentansprüche für folgende Vertragsstaaten : CH, DE, FR, GB, LI, NL**

**1.** Ferroelektrische Flüssigkristallmischung, bestehend aus mindestens zwei Komponenten, dadurch gekennzeichnet, daß sie als eine Komponente mindestens einen Komplexliganden für Kationen enthält, der mindestens zwei Stickstoff- und/oder Sauerstoff- und/oder Schwefel und/oder Phosphordonorzentren aufweist, wobei folgende Verbindungen ausgenommen sind:
a) Sauerstoff- und Schwefelkronen;
b) Ethylenglykol und Triethylenglykol;

c) Acetylaceton, Thenoyltrifluoraceton, Dibenzoylmethan, α-Benzoinoxim, o-Oxyacetophenon, α-1-Oxysantonin, Pyromekonsäure, Tropolon, Chinon, Oxychinone, Oxynaphthochinon, Naphthazarin, Oxyanthrachinon, Alizarin, Oxysäuren, Salicylsäure, Oxyester, Acetessigester, Diketondioxime, Dimethylglyoxim, 8-Oxychinolin, 1-Oxyacridin, 10-Oxybenzochinolin, 1-Oxyphenazin, Oxyazobenzol, Nitrosonaphthol, Oxychinolin-N-oxid, Aminosäuren, Anthranilsäure, Picolinsäure, Phenazin-α-carbonsäure, Chinaldinsäure, Triazin, Biuret, Formazan, Diphenylthiocarbazon, Dipyridin, Phenanthrolin, Salicylaldehyd-o-oxyphenylimin, Luminolderivate, Oxyazocarbonsäuren, Terpyridin, "Ammonia-adiacetic-acid", Bissalicylaldehyd-ethylendiimin, Phthalocyanin, Porphin, Porphyrin, Trissalicylaldehyd-diimin, 1,8-Bissalicylidenamino-3,6-dithiaoctan und Oxyketone;

d)

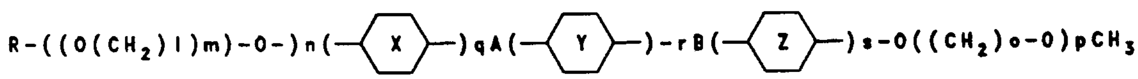

wobei R für eine Alkylgruppe, l, m, n für null oder eine natürliche Zahl, o und p für eine natürliche Zahl und mindestens eines von q, r oder s für eine natürliche Zahl außer null, die anderen für null oder eine natürliche Zahl stehen; A und B stehen für Einfachbindungen oder COO, OCO, $CH_2O$ und CHCH und die Ringe X, Y und Z für einen Benzolring, einen Pyrimidinring, einen Pyridinring einen Pyridazinring, einen Pyrazinring, einen Cyclohexanring oder einen Thiadiazolring;

e) $R(-O-(CH_2)_n)_m-O-R$,

wobei R eine Alkylgruppe und n und m natürliche Zahlen bedeuten.

**2.** Ferroelektrische Flüssigkristallmischung gemäß Anspruch 1, dadurch gekennzeichnet, daß die Komplexliganden elektrisch neutrale Verbindungen sind.

**3.** Ferroelektrische Flüssigkristallmischung, bestehend aus mindestens zwei Komponenten, dadurch gekennzeichnet, daß sie als eine Komponente mindestens einen medio- oder makrocyclischen Komplexliganden für Kationen enthält, der mindestens zwei Stickstoff- und/oder Sauerstoff- und/oder Phosphordonorzentren aufweist, wobei folgende Verbindungen ausgenommen sind: Sauerstoffkronen, Schwefelkronen, Phthalocyanin, Porphin und Porphyrin.

**4.** FLC-Mischung gemäß Anspruch 3, dadurch gekennzeichnet, daß die Komplexliganden Kryptanden sind.

**5.** FLC-Mischung gemäß Anspruch 3, dadurch gekennzeichnet, daß die Komplexliganden Coronanden sind.

**6.** FLC-Mischung gemäß Anspruch 3, dadurch gekennzeichnet, daß die Komplexliganden Podanden sind.

**7.** FLC-Mischung gemäß Anspruch 3, dadurch gekennzeichnet, daß die Komplexliganden bicyclische Verbindungen sind, die mindestens zwei Stickstoffatome enthalten.

**8.** FLC-Mischung gemäß Anspruch 3, dadurch gekennzeichnet, daß die Komplexliganden bicyclische oder tricyclische Verbindungen sind.

**9.** FLC-Mischung gemäß Anspruch 3, dadurch gekennzeichnet, daß die Komplexliganden bicyclische oder tricyclische Verbindungen sind, die mindestens zwei Stickstoffatome sowie mindestens vier Sauerstoffatome enthalten.

**10.** FLC-Mischung gemäß Anspruch 3, dadurch gekennzeichnet, daß sie mindestens zwei verschiedene Komplexliganden für Ionen enthält.

**11.** FLC-Mischung gemäß Anspruch 3, dadurch gekennzeichnet, daß sie mindestens einen Komplexliganden für Alkali- und/oder Erdalkalimetallionen enthält.

**12.** FLC-Mischung gemäß Anspruch 1, dadurch gekennzeichnet, daß sie mindestens zwei verschiedene Komplexliganden für unterschiedliche Kationen enthält.

13. FLC-Mischung gemäß Anspruch 3, dadurch gekennzeichnet, daß sie als Komplexliganden eine Verbindung der allgemeinen Formel (II) enthält

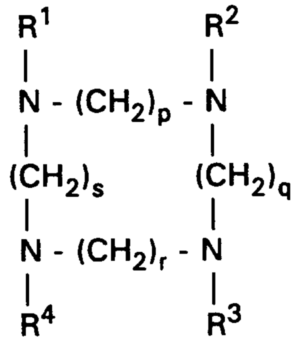

(II)

wobei $-R^1$, $-R^2$, $-R^3$ und $-R^4$ unabhängig voneinander -H, $-(C_1-C_{12})$Alkyl,

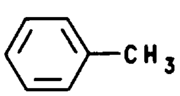 , 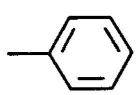 , 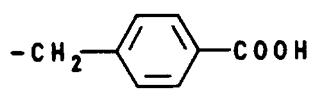 oder 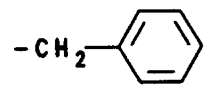

bedeuten und p, q, r, s unabhängig voneinander eine ganze Zahl von 2 bis 4, wobei p + q + r + s = 8 bis 16 ist, bedeuten.

14. Ferroelektrische Flüssigkristallmischung, bestehend aus mindestens zwei Komponenten, dadurch gekennzeichnet, daß sie als eine Komponente mindestens einen Komplexliganden der allgemeinen Formel (I) enthält,

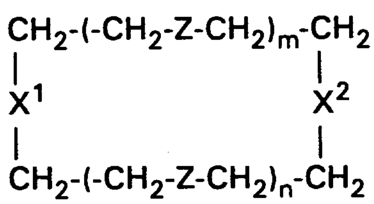

(I)

wobei

-Z- -O- oder -S-,

m, n ganze Zahlen größer Null sind, wobei m + n = 2 bis 6 ist,

$-X^1-$, $-X^2-$ gleich oder verschieden

-Z-, -NR-,

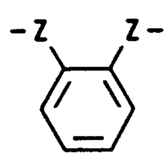 , 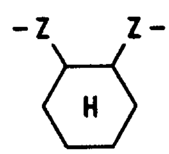

oder

$-X^1-$, $-X^2-$ zusammen

$>N-CH_2(-CH_2-Z-CH_2)_l-CH_2-N<$ oder

$>N-CO(-CH_2-Z-CH_2)_l-CO-N<$ oder

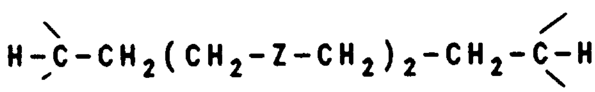

sind

wobei

-R -Alkyl oder -Alkyloxy mit 1 bis 15 C-Atomen, -Phenyl, -Benzyl oder -Benzoyl und

l 1 oder 2 bedeuten,

mit der Maßgabe, daß $X^1$, $X^2$ und Z nicht alle gleichzeitig Sauerstoff oder alle gleichzeitig Schwefel sind.

**15.** FLC-Mischung gemäß einem oder mehreren der Ansprüche 1 bis 14, dadurch gekennzeichnet, daß sie 0,01 bis 10 Mol-% mindestens eines Komplexliganden enthält.

**16.** Verwendung von ferroelektrischen Flüssigkristallmischungen gemäß einem oder mehreren der Ansprüche 1 bis 14 in elektrooptischen Schalt- und Anzeigevorrichtungen.

**17.** Verwendung von ferroelektrischen Flüssigkristallmischungen gemäß einem oder mehreren der Ansprüche 1 bis 14 in SSFLC-Zellen mit einer Schichtdicke von 1 bis 10 µm.

**18.** Flüssigkristall-Schalt- und -Anzeigevorrichtung, enthaltend ein ferroelektrisches flüssigkristallines Medium, Trägerplatten, Elektroden, mindestens eine Orientierungsschicht sowie gegebenenfalls zusätzliche Hilfsschichten, dadurch gekennzeichnet, daß das ferroelektrische flüssigkristalline Medium eine FLC-Mischung gemäß einem oder mehreren der Ansprüche 1 bis 14 darstellt.

**19.** Flüssigkristall-Schalt- und -Anzeigevorrichtung gemäß Anspruch 18, dadurch gekennzeichnet, daß die Schalt- und Anzeigevorrichtung eine SSFLC-Zelle mit einer FLC-Schichtdicke von 1 bis 20 µm ist und die FLC-Mischung als Komplexliganden mindestens eine medio- oder makrocyclische Verbindung enthält.

**20.** Flüssigkristall-Schalt- und -Anzeigevorrichtung gemäß Anspruch 18, dadurch gekennzeichnet, daß die Schalt- und Anzeigevorrichtung eine SSFLC-Zelle mit einer FLC-Schichtdicke von 1 bis 10 µm ist und die FLC-Mischung als Komplexliganden mindestens einen Kryptanden und/oder Coronanden enthält.

**21.** Flüssigkristall-Schalt- und Anzeigevorrichtung gemäß Anspruch 18, dadurch gekennzeichnet, daß die Orientierungsschicht aus einem $SiO_2$- enthaltenden Material besteht.

**22.** Ferroelektrische Flüssigkristallmischung, bestehend aus mindestens zwei Komponenten und mit einer Spontanpolarisation von größer 30 $nCcm^{-2}$, dadurch gekennzeichnet, daß sie als eine Komponente mindestens einen Komplexliganden für Ionen enthält.

**23.** Ferroelektrische Flüssigkristallmischung, bestehend aus mindestens zwei Komponenten, dadurch gekennzeichnet, daß sie als chirale Komponente mindestens ein Oxiranether- und/oder Oxiranester- und/oder Dioxolanderivat enthält und als eine zweite mindestens einen Komplexliganden für Ionen.

**Claims**

**Claims for the following Contracting States : AT, BE, DK, ES, GR, IT, LU, SE**

**1.** A ferroelectric liquid-crystal mixture comprising at least two components, wherein one component is at least one complex ligand for ions.

**2.** An FLC mixture as claimed in claim 1, containing at least one complex ligand for cations.

**3.** An FLC mixture as claimed in claim 1, wherein the complex ligands are electrically neutral compounds.

**4.** An FLC mixture as claimed in claim 1, wherein the complex ligands complex cations and contain at least two nitrogen and/or oxygen and/or sulfur and/or phosphorus donor centers.

**5.** An FLC mixture as claimed in claim 1, wherein the complex ligands are mediocyclic or macrocyclic compounds.

**6.** An FLC mixture as claimed in claim 1, wherein the complex ligands are cryptands.

**7.** An FLC mixture as claimed in claim 1, wherein the complex ligands are coronands.

**8.** An FLC mixture as claimed in claim 1, wherein the complex ligands are podands.

**9.** An FLC mixture as claimed in claim 1, wherein the complex ligands are bicyclic compounds which contain at least two nitrogen atoms.

**10.** An FLC mixture as claimed in claim 1, wherein the complex ligands are bicyclic or tricyclic compounds.

**11.** An FLC mixture as claimed in claim 1, wherein the complex ligands are bicyclic or tricyclic compounds which contain at least two nitrogen atoms and at least four oxygen atoms.

**12.** An FLC mixture as claimed in claim 1, containing at least two different complex ligands for ions.

**13.** An FLC mixture as claimed in claim 1, containing at least one complex ligand for alkali metal and/or alkaline earth metal ions.

**14.** An FLC mixture as claimed in claim 1, containing at least two different complex ligands for different cations.

**15.** An FLC mixture as claimed in claim 1, wherein the complex ligand is a compound of the formula (I),

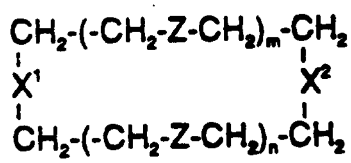

(I)

in which

-Z- is -O- or -S-,
m and n are integers greater than zero, where m + n = 2 to 6,
$-X^1-$ and $-X^2-$ are identical or different and are -Z-, -NR-,

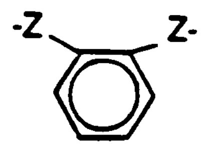 , 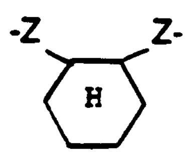

or
$-X^1-$ and $-X^2-$ together are
$>N-CH_2(-CH_2-Z-CH_2)_l-CH_2-N<$ or
$>N-CO(-CH_2-Z-CH_2)_l-CO-N<$ or

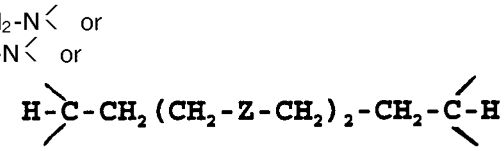 ,

where
R is alkyl or alkoxy having from 1 to 15 carbon atoms, phenyl, benzyl or benzoyl and
l is 1 or 2.

16. An FLC mixture as claimed in claim 1, wherein the complex ligand is a compound of the formula (II)

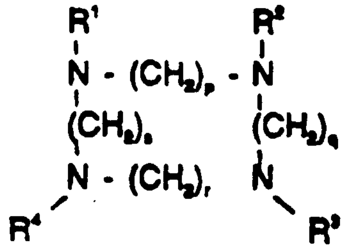

(II)

where $R^1$, $R^2$, $R^3$ and $R^4$, independently of one another, are -H, -($C_1$-$C_{12}$)alkyl,

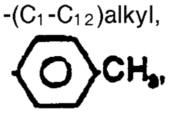 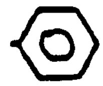 ,

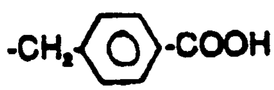 or 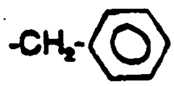

and p, q, r and s, independently of one another, are an integer from 2 to 4, and where p+q+r+s = 8 to 16.

17. An FLC mixture as claimed in claim 1, containing from 0.01 to 10 mol-% of at least one complex ligand.

18. An FLC mixture as claimed in claim 1, which has a spontaneous polarization of at least 35 $nC \cdot cm^{-2}$.

19. The use of a ferroelectric liquid-crystal mixture as claimed in claim 1 in electrooptical switching and display devices.

20. The use of a ferroelectric liquid-crystal mixture as claimed in claim 1 in SSFLC cells having a cell thickness of from 1 to 10 $\mu$m.

21. A liquid-crystal switching or display device containing a ferroelectric liquid-crystalline medium, outer plates, electrodes, at least one alignment layer and, if desired, additional auxiliary layers, wherein the ferroelectric liquid-crystalline medium is an FLC mixture which contains at least one compound which is a complex ligand for ions.

22. A liquid-crystal switching or display device as claimed in claim 21, which is an SSFLC cell having an FLC layer thickness of from 1 to 20 $\mu$m and wherein the FLC mixture contains, as complex ligand, at least one mediocyclic or macrocyclic compound.

23. A liquid-crystal switching or display device as claimed in claim 21, which is an SSFLC cell having an FLC layer thickness of from 1 to 10 $\mu$m and wherein the FLC mixture contains, as complex ligand, at least one cryptand and/or coronand.

24. A liquid-crystal switching or display device as claimed in claim 21, wherein the alignment layer comprises an $SiO_2$-containing material.

**Claims for the following Contracting States : CH, DE, FR, GB, LI, NL**

1. A ferroelectric liquid-crystal mixture comprising at least two components, wherein one component is at least one complex ligand for cations, which contains at least two nitrogen and/or oxygen and/or sulfur and/or phosphorus donor centers, with the exception of the following compounds:
   a) oxygen crowns and sulphur crowns;
   b) ethylene glycol and triethylene glycol;
   c) acetylacetone, thenoyltrifluoroacetone, dibenzoylmethane, $\alpha$-benzoin oxime, o-hydroxyacetophenone, $\alpha$-1-hydroxysantonin, pyromeconic acid, tropolone, quinone, hydroxyquinones,

hydroxynaphthoquinone, naphthazarin, hydroxyanthraquinone, alizarin, hydroxy acids, salicylic acid, hydroxy esters, acetoacetic esters, diketone-dioximes, dimethylglyoxime, 8-hydroxyquinoline, 1-hydroxyacridine, 10-hydroxybenzoquinoline, 1-hydroxyphenazine, hydroxyazobenzene, nitrosonaphthol, hydroxyquinoline N-oxide, amino acids, anthranilic acid, picolinic acid, phenazine-α-carboxylic acid, quinaldic acid, triazine, biuret, formazan, diphenylthiocarbazone, dipyridine, phenanthroline, salicylaldehyde o-hydroxyphenylimine, luminol derivatives, hydroxyazocarboxylic acids, terpyridine, "ammmonia-diacetic acid", bissalicylaldehyde ethylenediimine, phthalocyanine, porphin, porphyrin, trissalicylaldehyde diimine, 1,8-bissalicylideneamino-3,6-dithiaoctane and hydroxy ketones;

d)

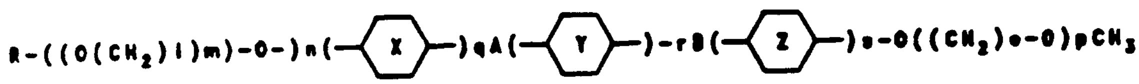

in which R is an alkyl group, l, m and n are zero or a natural number, o and p are a natural number and at least one of q, r and s is a natural number other than zero, while the others are zero or a natural number; A and B are single bonds or COO, OCO, $CH_2O$ and CHCH and the rings X, Y and Z are a benzene ring, a pyrimidine ring, a pyridine ring, a pyridazine ring, a pyrazine ring, a cyclohexane ring or a thiadiazole ring;

e) $R(-O-(CH_2)_n)_m-O-R$,

in which R is an alkyl group and n and m are natural numbers.

**2.** A ferroelectric liquid-crystal mixture as claimed in claim 1, wherein the complex ligands are electrically neutral compounds.

**3.** A ferroelectric liquid-crystal mixture comprising at least two components, wherein one component is at least one mediocyclic or macrocyclic complex ligand for cations, which contains at least two nitrogen and/or oxygen and/or phosphorus donor centers, with the exception of the following compounds: oxygen crowns, sulfur crowns, phthalocyanine, porphin and porphyrin.

**4.** An FLC mixture as claimed in claim 3, wherein the complex ligands are cryptands.

**5.** An FLC mixture as claimed in claim 3, wherein the complex ligands are coronands.

**6.** An FLC mixture as claimed in claim 3, wherein the complex ligands are podands.

**7.** An FLC mixture as claimed in claim 3, wherein the complex ligands are bicyclic compounds which contain at least two nitrogen atoms.

**8.** An FLC mixture as claimed in claim 3, wherein the complex ligands are bicyclic or tricyclic compounds.

**9.** An FLC mixture as claimed in claim 3, wherein the complex ligands are bicyclic or tricyclic compounds which contain at least two nitrogen atoms and at least four oxygen atoms.

**10.** An FLC mixture as claimed in claim 3, containing at least two different complex ligands for ions.

**11.** An FLC mixture as claimed in claim 3, containing at least one complex ligand for alkali metal and/or alkaline earth metal ions.

**12.** An FLC mixture as claimed in claim 1, containing at least two different complex ligands for different cations.

**13.** An FLC mixture as claimed in claim 3, wherein the complex ligand is a compound of the formula (II)

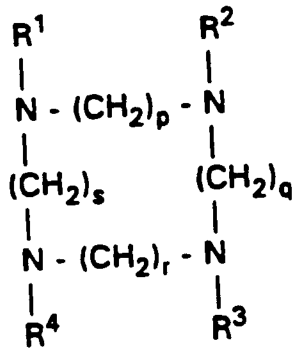

(II)

where $R^1$, $R^2$, $R^3$ and $R^4$, independently of one another, are -H, -($C_1$-$C_{12}$)alkyl,

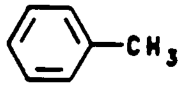 , 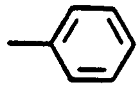 , 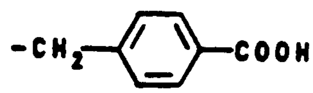 or 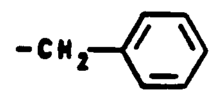

and p, q, r and s, independently of one another, are an integer from 2 to 4, and where $p+q+r+s = 8$ to 16.

**14.** A ferroelectric liquid-crystal mixture comprising at least two compounds, wherein one component is at least one complex ligand of the formula (I),

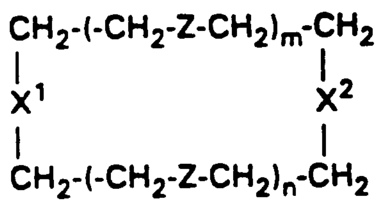

(I)

in which

| | |
|---|---|
| -Z- | is -O- or -S-, |
| m and n | are integers greater than zero, where $m+n = 2$ to 6, |
| -$X^1$- and -$X^2$- | are identical or different and are |
| | -Z-, -NR-, |

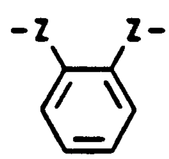 , 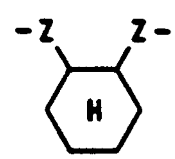

or

-$X^1$- and -$X^2$- together are

$>N-CH_2(-CH_2-Z-CH_2)_l-CH_2-N<$ or

$>N-CO(-CH_2-Z-CH_2)_l-CO-N<$ or

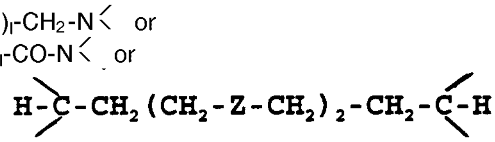 ,

where

| | |
|---|---|
| R | is alkyl or alkoxy having from 1 to 15 carbon atoms, phenyl, benzyl or benzoyl and |
| l | is 1 or 2. |

with the proviso that $X^1$, $X^2$ and Z are not all simultaneously oxygen or all simultaneously sulfur.

**15.** An FLC mixture as claimed in one or more of claims 1 to 14, containing from 0.01 to 10 mol-% of at least one complex ligand.

**16.** The use of a ferroelectric liquid-crystal mixture as claimed in one or more of claims 1 to 14 in electro-optical switching and display devices.

**17.** The use of a ferroelectric liquid-crystal mixture as claimed in one or more of claims 1 to 14 in SSFLC cells having a cell thickness of from 1 to 10 $\mu$m.

**18.** A liquid-crystal switching or display device containing a ferroelectric liquid-crystalline medium, outer plates, electrodes, at least one alignment layer and, if desired, additional auxiliary layers, wherein the ferroelectric liquid-crystalline medium is an FLC mixture as claimed in one or more of claims 1 to 14.

**19.** A liquid-crystal switching or display device as claimed in claim 18, which is an SSFLC cell having an FLC layer-thickness of from 1 to 20 $\mu$m and wherein the FLC mixture contains, as complex ligand, at least one mediocyclic or macrocyclic compound.

**20.** A liquid-crystal switching or display device as claimed in claim 18, which is an SSFLC cell having an FLC layer thickness of from 1 to 10 $\mu$m and wherein the FLC mixture contains, as complex ligand, at least one cryptand and/or coronand.

**21.** A liquid-crystal switching or display device as claimed in claim 18, wherein the alignment layer comprises an $SiO_2$-containing material.

**22.** A ferroelectric liquid-crystal mixture comprising at least two components and with a spontaneous polarization of greater than 30 $nC \cdot cm^{-2}$, wherein one component is at least one complex ligand for ions.

**23.** A ferroelectric liquid-crystal mixture comprising at least two components, containing as chiral component at least one oxirane ether and/or oxirane ester and/or dioxolane derivative and as a second component at least one complex ligand for ions.

**Revendications**
**Revendications pour les Etats contractants suivants : AT, BE, DK, ES, GR, IT, LU, SE**

**1.** Mélange de cristaux liquides ferroélectriques (CLF) composé d'au moins deux composants caractérisé en ce qu'ils contient en tant qu'un des composants au moins un ligand complexe pour des ions.

**2.** Mélange de CLF selon la revendication 1, caractérisé en ce qu'il contient au moins un ligand complexe pour des cations.

**3.** Mélange de CLF selon la revendication 1, caractérisé en ce que les ligands complexes sont des composés électriquement neutres.

**4.** Mélange de CLF selon la revendication 1, caractérisé en ce que les ligands complexes forment des complexes avec des cations et présentent au moins deux centres donneurs azote et/ou oxygène et/ou soufre et/ou phosphore.

**5.** Mélange de CLF selon la revendication 1, caractérisé en ce que les ligands complexes représentent des composés cycliques moyens ou macrocycliques.

**6.** Mélange de CLF selon la revendication 1, caractérisé en ce que les ligands complexes sont des cryptands.

**7.** Mélange de CLF selon la revendication 1, caractérisé en ce que les ligands complexes sont des coronands.

**8.** Mélange de CLF selon la revendication 1, caractérisé en ce que les ligands complexes sont des podands.

**9.** Mélange de CLF selon la revendication 1, caractérisé en ce que les ligands complexes sont des composés bicycliques, qui contiennent au moins deux atomes d'azote.

**10.** Mélange de CLF selon la revendication 1, caractérisé en ce que les ligands complexes sont des composés bicycliques ou tricycliques.

**11.** Mélange de CLF selon la revendication 1, caractérisé en ce que les ligands complexes sont des composés bicycliques ou tricycliques, qui contiennent au moins deux atomes d'azote ainsi qu'au moins 4 atomes d'oxygène.

**12.** Mélange de CLF selon la revendication 1, caractérisé en ce qu'il contient au moins deux ligands complexes différents pour des ions.

**13.** Mélange de CLF selon la revendication 1, caractérisé en ce qu'il contient au moins un ligand complexe pour les ions de métaux alcalins et/ou métaux alcalino-terreux.

**14.** Mélange de CLF selon la revendication 1, caractérisé en ce qu'il contient au moins deux ligands complexes différents pour des cations différents.

**15.** Mélange de CLF selon la revendication 1, caractérisé en ce qu'il contient en tant que ligand complexe un composé de formule générale (I)

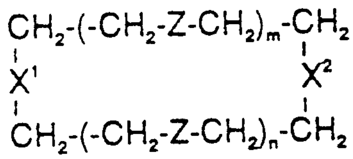

(I)

(I)

-Z- représentant -O- ou -S-,

m, n représentant des nombres entiers supérieurs à 0, m + n = 2 à 6,

$-X^1-$, $-X^2-$ sont identiques ou différents
-Z-, -NR-,

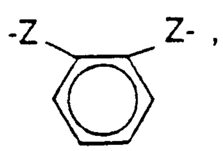 , 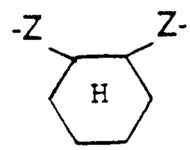

ou

$-X^1-$, $-X^2-$, ensemble représentent

$>N-CH_2(-CH_2-Z-CH_2)_l-CH_2-N<$ ou

$>N-CO(-CH_2-Z-CH_2)_l-CO-N<$ ou

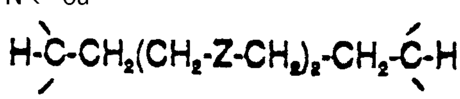

-R représentant les -alkyle ou -alcoxy comportant de 1 à 15 atomes de carbone, -phényle, -benzyle ou -benzoyle, et

l représentant 1 ou 2.

**16.** Mélange de CLF selon la revendication 1, caractérisé en ce qu'il contient en tant que ligand complexe un composé de formule générale (II)

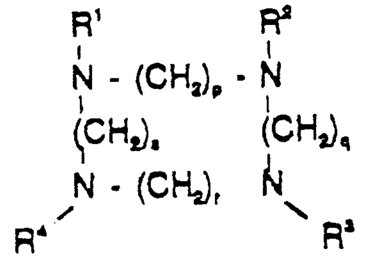 (II)

$-R^1$, $-R^2$, $-R^3$ et $-R^4$, indépendamment l'un de l'autre, représentant -H, -(alkyle en $C_1$-$C_{12}$),

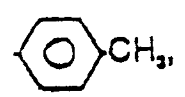 , 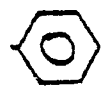 , 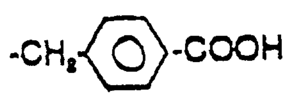 ou 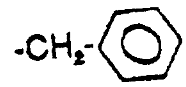

et p, q, r, s, indépendamment l'un de l'autre, signifiant un nombre entier de 2 à 4, avec $p+q+r+s = 8$ à 16 .

**17.** Mélange de CLF selon la revendication 1, caractérisé en ce qu'il contient de 0,01 à 10 moles-% d'au moins un ligand complexe.

**18.** Mélange de CLF selon la revendication 1, caractérisé en ce qu'il présente une polarisation spontanée d'au moins 35 $nC \cdot cm^{-2}$.

**19.** Utilisation de mélanges de cristaux liquides ferroélectriques selon la revendication 1 dans des dispositifs d'affichage et de commutation électrooptiques.

**20.** Utilisation de mélanges de cristaux liquides ferroélectriques selon la revendication 1 dans des cellules SSFLC ("surface stabilized ferroelectric liquid crystal") avec une épaisseur de couche de 1 à 10 $\mu m$.

**21.** Dispositif de commutation et d'affichage à cristaux liquides contenant un milieu de cristaux liquides ferroélectriques, des plaques de support, des électrodes, au moins une couche d'orientation ainsi qu'éventuellement des couches auxiliaires supplémentaires, caractérisé en ce que le milieu de CLF représente un mélange de cristaux liquides ferroélectriques qui contient au moins un composé qui représente un ligand complexe pour des ions.

**22.** Dispositif de commutation et d'affichage à cristaux liquides selon la revendication 21, caractérisé en ce que le dispositif de commutation et d'affichage est une cellule SSFLC avec une épaisseur de couche de CLF de 1 à 20 $\mu m$ et que le mélange de CLF contient en tant que ligand complexe au moins un composé cycliques moyen ou macrocyclique.

**23.** Dispositif de commutation et d'affichage à cristaux liquides selon la revendication 21, caractérisé en ce que le dispositif de commutation et d'affichage est une cellule SSFLC avec une épaisseur de couche de CLF de 1 à 10 $\mu m$ et en ce que le mélange de CLF contient en tant que ligand complexe au moins un cryptand et/ou coronand.

**24.** Dispositif de commutation et d'affichage à cristaux liquides selon la revendication 21, caractérisé en ce que la couche d'orientation se compose de matériau contenant du $SiO_2$.

**Revendications pour les Etats contractants suivants : CH, DE, FR, GB, LI, NL**

**1.** Mélange de cristaux liquides ferroélectriques (CLF) composé d'au moins deux composants, caractérisé en ce qu'il contient en tant qu'un des composants au moins un ligand complexe pour des cations, qui

présente au moins deux centres donneurs azote et/ou oxygène et/ou soufre et/ou phosphore, en faisant exception des composés suivants :

a) couronnes d'oxygène et couronnes de soufre ;

b) éthylèneglycol et triéthylèneglycol ;

c) acétylacétone, thénoyltrifluoracétone, dibenzoylméthane, α-benzoinoxime, o-oxyacétophénone, α-1-oxysantonine, acide pyroméconique, tropolone, quinone, oxyquinones, oxynaphtoquinone, naphtazarine, oxyanthraquinone, alizarine, acides oxy, acide salicylique, esters oxy, acétate d'éthyle, dicétondioximes, diméthylglyoxime, 8-oxyquinoléine, 1-oxyacridine, 10-oxybenzoquinoléine, 1-oxyphénazine, oxyazobenzène, nitrosonaphtol, oxyquinoléine-N-oxyde, aminoacides, acide anthranilique, acide picolinique, acide phénazine-α-carboxylique, acide quinaldinique, triazine, biuret, formazane, diphénylthiocarbazone, dipyridine, phénanthroline, aldéhyde salicylique-o-oxyphénylimine, dérivé de luminol, acides oxyazocarboxyliques, terpyridine, "acide ammoniumadiacétique", aldéhyde bis-salicylique-éthylène diimine, phtalocyanine, porphine, porphyrine, aldéhyde trissalicylique-diimine, 1,8-bis-salicylidenamino-3,6-dithiaoctane et oxycétones ;

d)

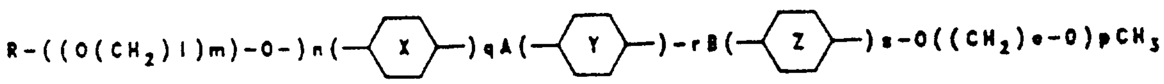

R représentant un groupe alkyle, l, m, n correspondant à 0 ou à un nombre naturel, o et p représentant un nombre naturel et au moins l'un des q, r ou s représentant un nombre naturel excepté 0, les autres correspondant à 0 ou à un nombre naturel ; A et B représentant des liaisons simples ou COO, OCO, $CH_2O$ et CHCH et les cycles X, Y et Z représentant un cycle de benzène, un cycle de pyrimidine, un cycle de pyridine, un cycle de pyridazine, un cycle de pyrazine, un cycle de cyclohexane ou un cycle de thiadiazole ;

e) $R(-O-(CH_2)_n)_m-O-R$,

A représentant un groupe alkyle et n et m signifiant des nombres naturels.

**2.** Mélange de cristaux liquides ferroélectriques selon la revendication 1, caractérisé en ce que les ligands complexes sont des composés électriquement neutres.

**3.** Mélange de cristaux liquides ferroélectriques selon la revendication 1, composé d'au moins deux composants, caractérisé en ce qu'il contient en tant qu'un composant au moins un ligand complexe cyclique moyen ou macrocyclique pour des cations, qui présente au moins deux centres donneurs azote et/ou oxygène et/ou phosphore, en faisant exception des composés suivants : couronnes d'oxygène, couronnes de soufre, phtalocyanine, porphine et porphyrine.

**4.** Mélange de CLF selon la revendication 3, caractérisé en ce que les ligands complexes sont des cryptands.

**5.** Mélange de CLF selon la revendication 3, caractérisé en ce que les ligands complexes sont des coronands.

**6.** Mélange de CLF selon la revendication 3, caractérisé en ce que les ligands complexes sont des podands.

**7.** Mélange de CLF selon la revendication 3, caractérisé en ce que les ligands complexes sont des composés bicycliques, qui contiennent au moins deux atomes d'azote.

**8.** Mélange de CLF selon la revendication 3, caractérisé en ce que les ligands complexes sont des composés bicycliques ou tricycliques.

**9.** Mélange de CLF selon la revendication 3, caractérisé en ce que les ligands complexes sont des composés bicycliques ou tricycliques, qui contiennent au moins deux atomes d'azote ainsi qu'au moins 4 atomes d'oxygène.

**10.** Mélange de CLF selon la revendication 3, caractérisé en ce qu'il contient au moins deux ligands complexes différents pour des ions.

**11.** Mélange de CLF selon la revendication 3, caractérisé en ce qu'il contient au moins un ligand complexe pour les ions de métaux alcalins et/ou de métaux alcalino-terreux.

**12.** Mélange de CLF selon la revendication 1, caractérisé en ce qu'il contient au moins deux ligands complexes différents pour des cations différents.

**13.** Mélange de CLF selon la revendication 3, caractérisé en ce qu'il contient en tant que ligand complexe un composé de formule générale (II)

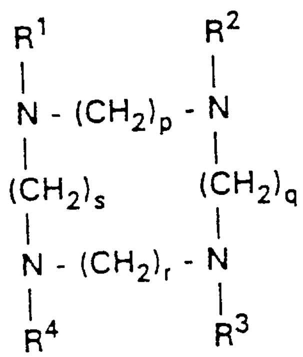

(II)

$-R^1$, $-R^2$, $-R^3$ et $-R^4$, indépendamment l'un de l'autre signifiant -H, -(alkyle en $C_1$-$C_{12}$),

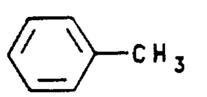 , 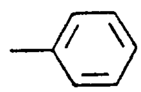 , 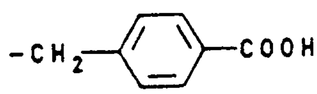 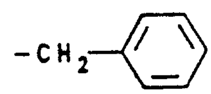

et p, q, r, s, indépendamment l'un de l'autre,
représentant un nombre entier de 2 à 4, avec $p+q+r+s = 8$ à 16.

**14.** Mélange de cristaux liquides ferroélectriques composé d'au moine deux composants caractérisé en ce qu'il contient en tant qu'un composant au moins un ligand complexe de formule générale (I)

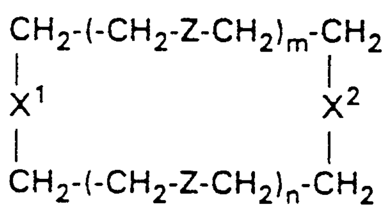

(I)

| | |
|---|---|
| -Z- | représentant -O- ou -S-, |
| m, n | représentant des nombres entiers supérieurs à 0, $m+n = 2$ à 6, |
| $-X^1$-, $-X^2$- | sont identiques ou différents |
| | -Z-, -NR-, |

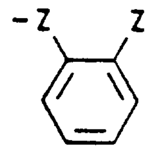 , 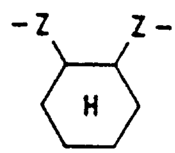

ou

$-X^1-$, $-X^2-$ ensemble, représentent

> N-$CH_2(-CH_2-Z-CH_2)_l-CH_2$-N< ou

> N-CO($-CH_2-Z-CH_2)_l$-CO-N< ou

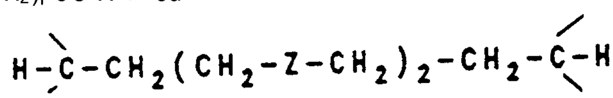

-R représentant les -alkyle ou -alcoxy comportant de 1 à 15 atomes de carbone, -phényle, -benzyle ou -benzoyle et l signifiant 1 ou 2,
à la condition que $X^1$, $X^2$ et Z ne soient pas tous simultanément l'oxygène, ou soient tous simultanément le soufre.

**15.** Mélange de CLF selon une ou plusieurs des revendications 1 à 14, caractérisé en ce qu'il contient de 0,01 à 10 moles % d'au moins un ligand complexe.

**16.** Utilisation de mélanges de cristaux liquides ferroélectriques selon une ou plusieurs des revendications 1 à 14 dans des dispositifs d'affichage et de commutation électrooptiques.

**17.** Utilisation de mélanges de cristaux liquides ferroélectriques selon une ou plusieurs des revendications 1 à 14 dans des cellules SSFLC avec une épaisseur de couche de 1 à 10 µm.

**18.** Dispositif à cristaux liquides de commutation et d'affichage contenant un milieu de cristaux liquides ferroélectriques, des plaques support, des électrodes, au moins une couche d' orientation ainsi qu'éventuellement des couches auxiliaires supplémentaires, caractérisé en ce que le milieu de CLF représente un mélange de CLF selon une ou plusieurs des revendications 1 à 14.

**19.** Dispositif à cristaux liquides de commutation et d'affichage selon la revendication 18, caractérisé en ce que le dispositif de commutation et d'affichage est une cellule SSFLC avec une épaisseur de couche de CLF de 1 à 20 µm et le mélange de CLF contient en tant que ligand complexe au moins un composé cyclique moyen ou macrocyclique.

**20.** Dispositif à cristaux liquides de commutation et d'affichage selon la revendication 18, caractérisé en ce que le dispositif de commutation et d'affichage est une cellule SSFLC avec une épaisseur de couche de CLF de 1 à 10 µm et le mélange de CLF contient en tant que ligand complexe au moins un cryptand et/ou coronand.

**21.** Dispositif à cristaux liquides de commutation et d'affichage selon la revendication 18, caractérisé en ce que la couche d'orientation est composée d'un matériau contenant du $SiO_2$.

**22.** Mélange de cristaux liquides ferroélectriques composés d'au moins deux composants et ayant une polarisation spontanée supérieure à 30 $nC \cdot cm^{-2}$, caractérisé en ce qu'il contient en tant qu'un composant au moins un ligand complexe pour des ions.

**23.** Mélange de cristaux liquides ferroélectriques composés d'au moins deux composants, caractérisé en ce qu'il contient en tant que composant chiral au moins un dérivé d'éthers d'oxiranne et/ou d'esters d'oxiranne et/ou de dioxolane et en tant que deuxième composant au moins un ligand complexe pour des ions.

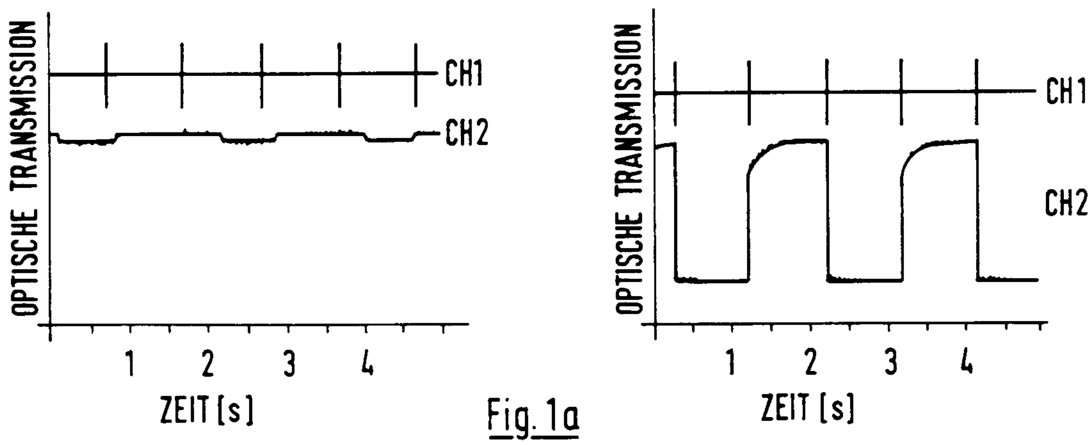


Fig. 1a

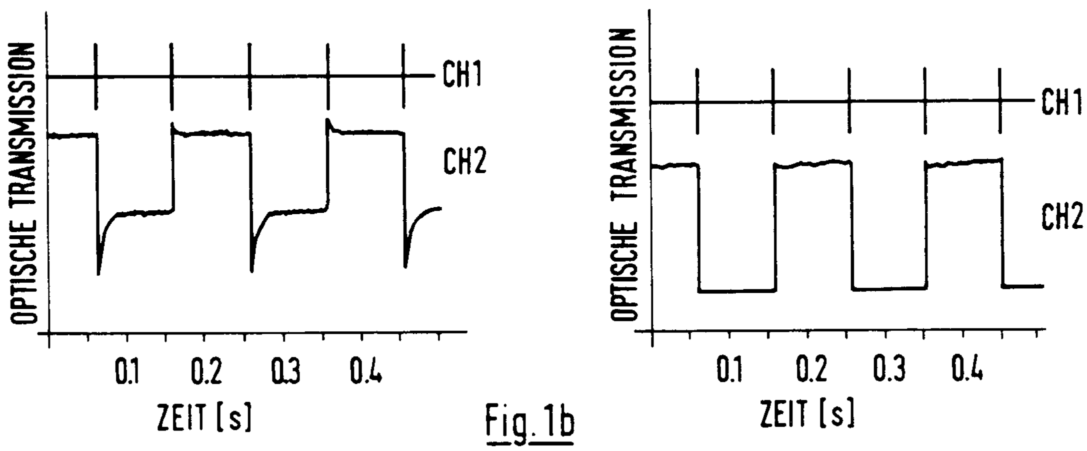


Fig. 1b

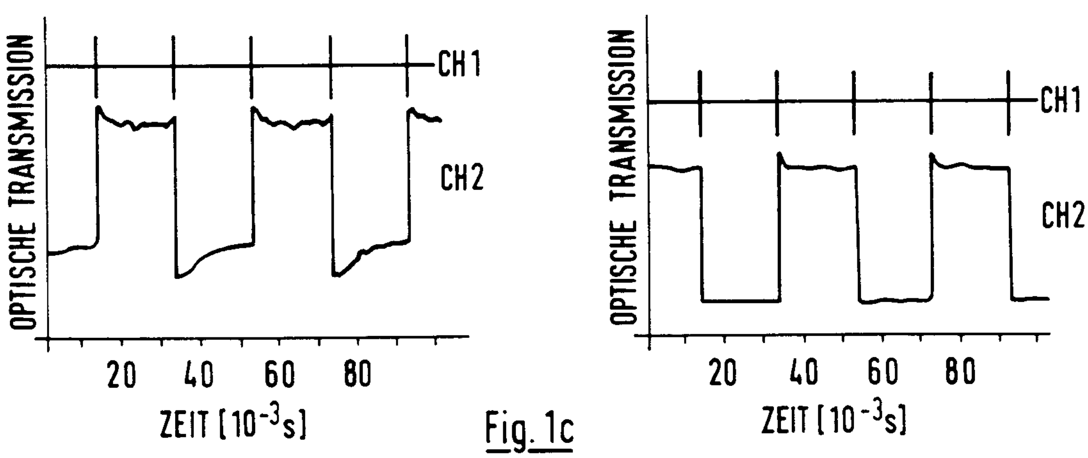


Fig. 1c

Fig. 1

DUNKELZUSTAND

OHNE KOMPLEXLIGAND MIT KOMPLEXLIGAND

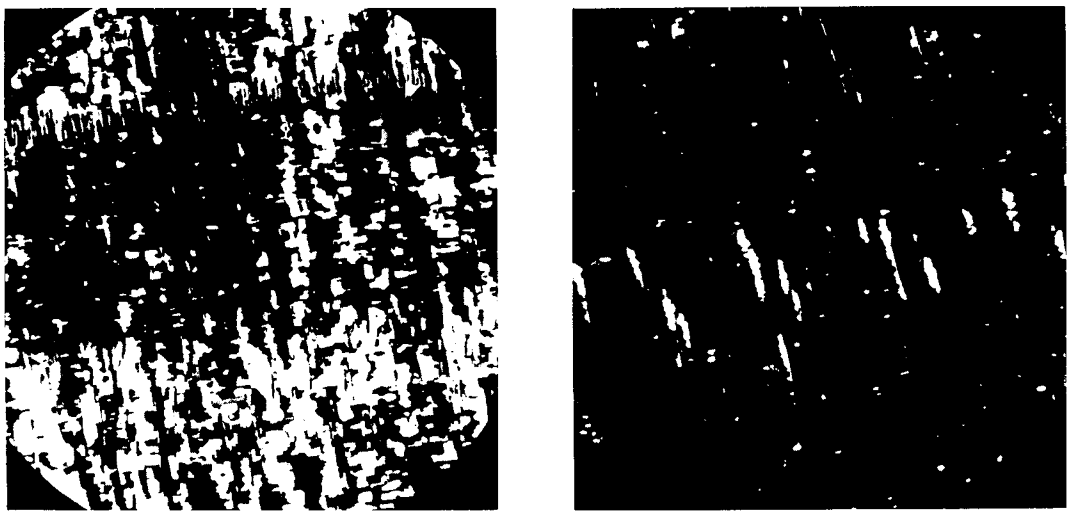

Fig. 2a

HELLZUSTAND

OHNE KOMPLEXLIGAND MIT KOMPLEXLIGAND

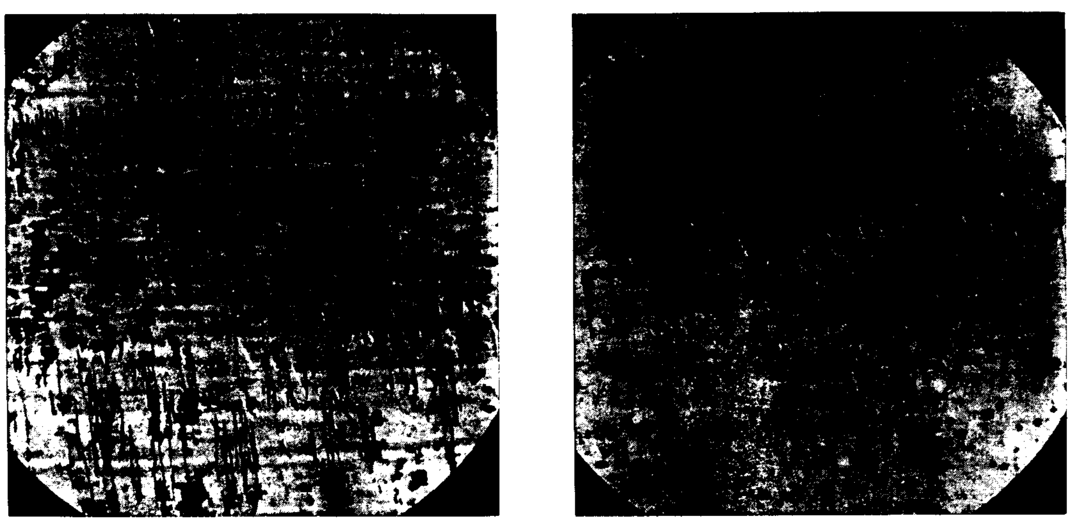

Fig. 2b

Fig. 2

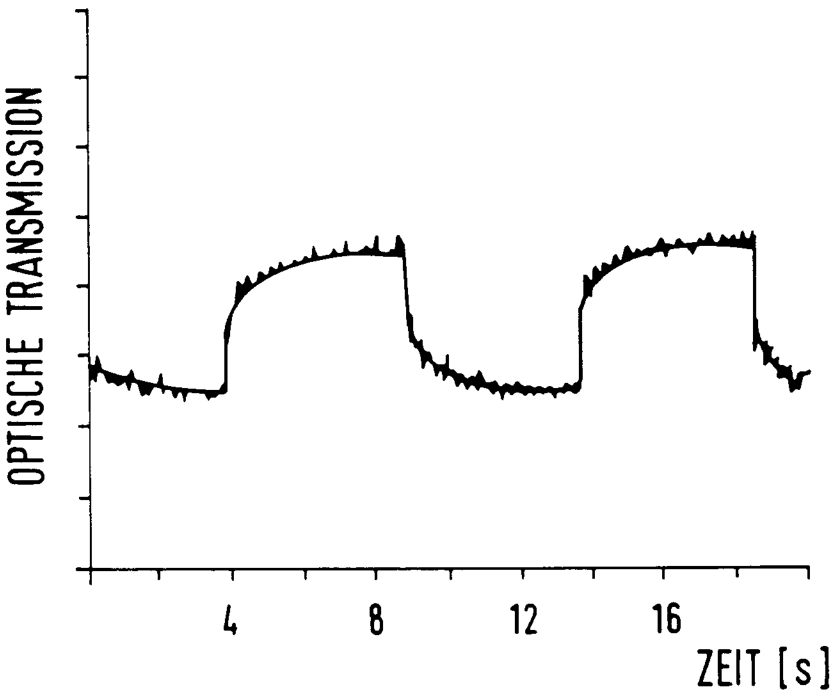


Fig. 3a

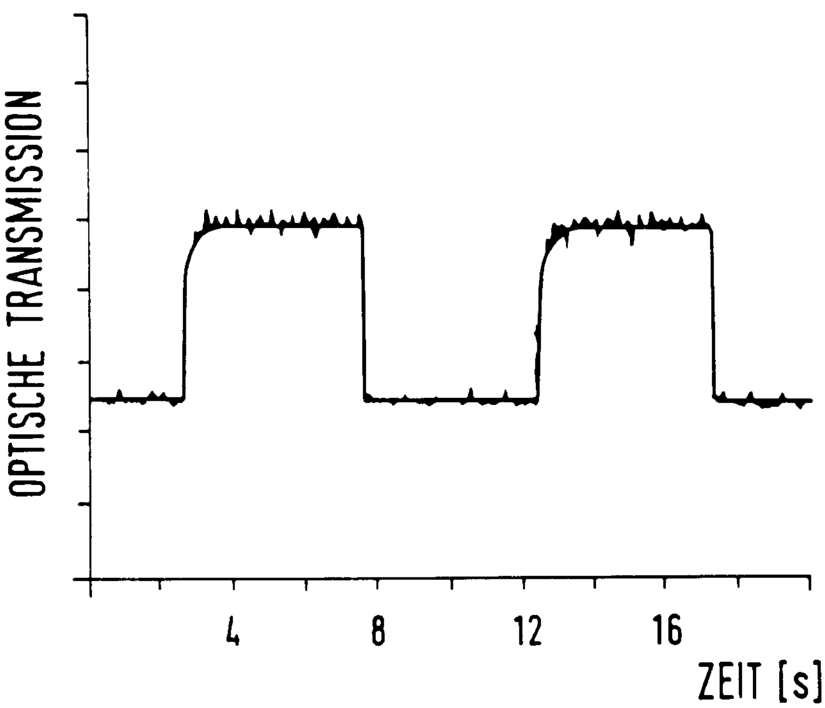


Fig. 3b

Fig. 3

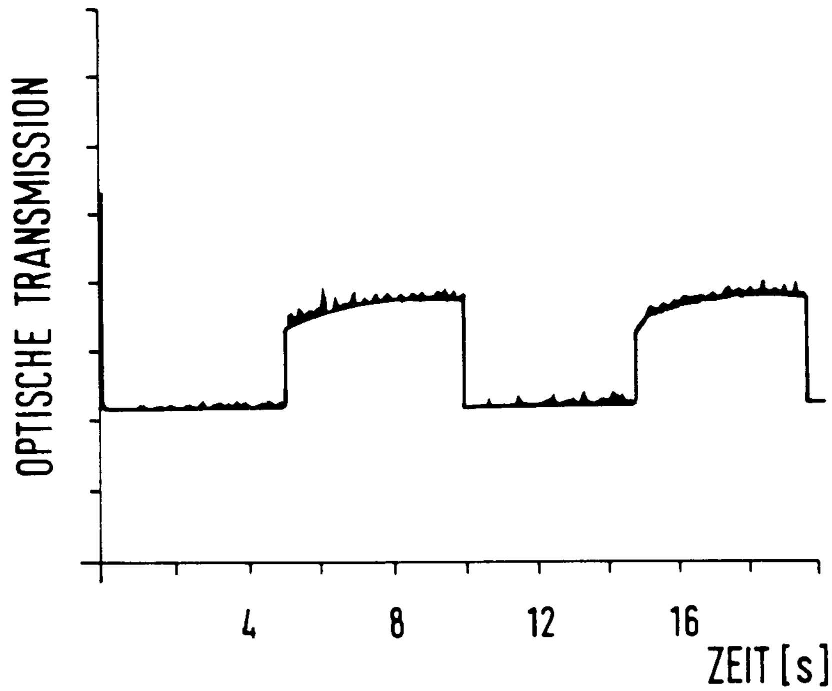


Fig. 4a

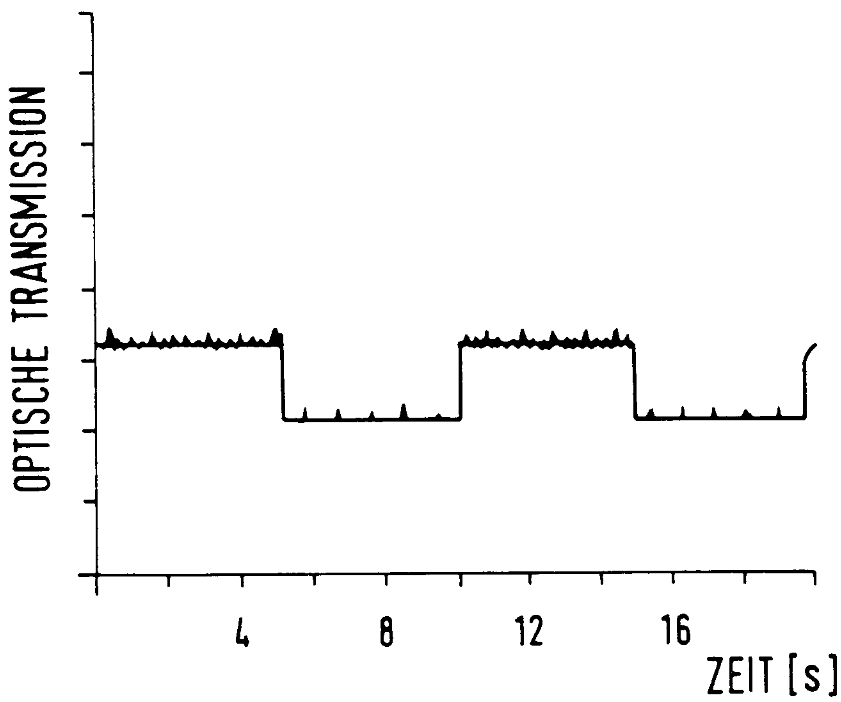


Fig. 4b

Fig. 4

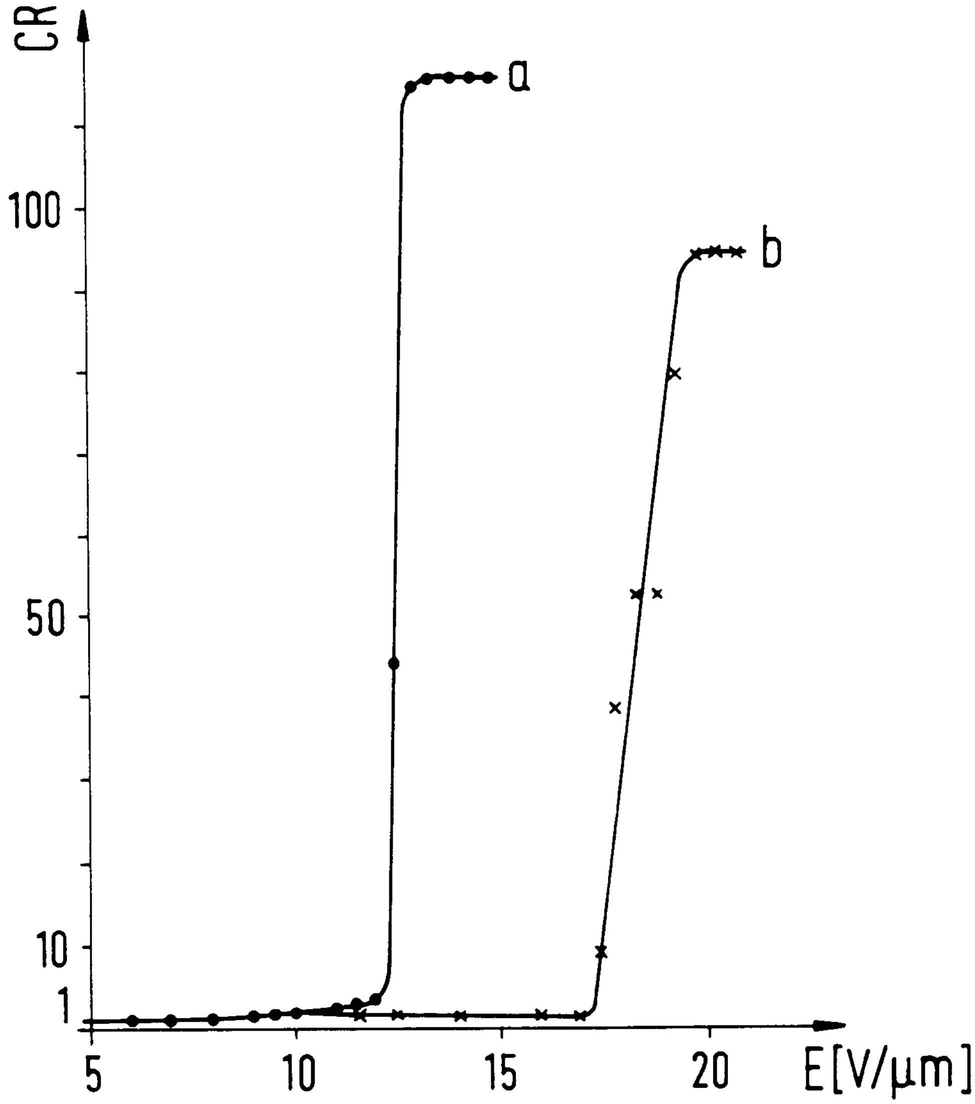


Fig. 5